Europäisches Patentamt

(19) European Patent Office

Office européen des brevets

(11) Veröffentlichungsnummer: **0 147 522**
B1

# (12) EUROPÄISCHE PATENTSCHRIFT

(45) Veröffentlichungstag der Patentschrift:
26.10.88

(51) Int. Cl.⁴: **F 16 D 65/02**

(21) Anmeldenummer: **84109613.4**

(22) Anmeldetag: **10.08.84**

---

(54) Schwimmfaustsattel-Scheibenbremse.

---

(30) Priorität: **02.09.83 DE 3331665**
**02.09.83 DE 3331668**

(43) Veröffentlichungstag der Anmeldung:
**10.07.85 Patentblatt 85/28**

(45) Bekanntmachung des Hinweises auf die Patenterteilung:
**26.10.88 Patentblatt 88/43**

(84) Benannte Vertragsstaaten:
**FR GB IT SE**

(56) Entgegenhaltungen:
**US - A - 4 082 167**
**US - A - 4 319 670**

(73) Patentinhaber: **ALFRED TEVES GmbH,**
**Guerickestrasse 7 Postfach 90 01 20, D-6000 Frankfurt am Main (DE)**

(72) Erfinder: **Schmidt, Herbert, Legienstrasse 35,**
**D-6230 Frankfurt/Main-Unterliederbach (DE)**
Erfinder: **Czich, Erhard, Goethestrasse 8,**
**D-6201 Bremthal-Eppstein (DE)**
Erfinder: **Bissinger, Otto, Crufterostrasse 1a,**
**D-6239 Kriftel (DE)**

(74) Vertreter: **Grau, Ulf, c/o ALFRED TEVES GMBH**
**Guerickestrasse 7, D-6000 Frankfurt (M) 90 (DE)**

---

## Beschreibung

Die Erfindung betrifft eine Schwimmfaustsattel-Scheibenbremse, insbesondere für Kraftfahrzeuge, mit einem fest angeordneten Bremsträger, mit dem ein Bremssattel über einen oder zwei Führungsbolzen axial verschiebbar verbunden ist, wobei der eine Führungsbolzen als Schwenkachse für den Bremssattel dient.

Eine derartige Schwimmfaustsattel-Scheibenbremse, bei der zwei Führungsbolzen vorgesehen sind, von denen einer als ein aus dem Bremsträger herausschraubbares Bauteil ausgebildet ist und der andere nach Entfernen des ersten Führungsbolzens als Schwenkachse für den Bremssattel dient, ist bereits aus der DE-A-2 619 984 bekannt. Bei einer derartigen Scheibenbremse ist es nicht mehr notwendig, während einer Bremseninspektion zum Austauschen der Bremsbeläge die wesentlichen Teile der gesamten Bremse zu demontieren. Nach Lösen eines Führungsbolzens kann der Bremssattel in einfacher Weise herausgeschwenkt und die erforderliche Inspektion vorgenommen werden. Nach Beendigung der Arbeiten wird der Bremssattel wieder eingeschwenkt und durch Einführen des entfernten Führungsbolzens wieder am Bremsträger befestigt.

Es hat sich aber nun gezeigt, dass der zum Belagwechsel hochgeklappte, recht schwere Bremssattel durch versehentliches Anstossen herunterfallen und somit einen mit einem Belagwechsel beschäftigten Mechaniker erheblich verletzen kann.

Aus der US-A-4 319 670 ist eine Scheibenbremse bekannt, bei der während des Belagwechsels ein Stab in einem Loch des Bremsträgers gesteckt wird. Dieser Stab verhindert, dass das Gehäuse herunterfällt. Nachteilig wird hierbei immer ein zusätzliches Mittel, nämlich ein Stab benötigt, der nicht an der Scheibenbremse angeordnet ist, sondern von einem Mechaniker extra bereitgestellt werden muss.

Aus der US-A-4 082 167 ist eine Scheibenbremse bekannt, bei der eine Schraube, die in einem Sattel befestigt ist, in eine axiale Nut eines Bolzens eingreift. Die Schraube verhindert, dass der Sattel von dem Bolzen gezogen und eine Dichtung beschädigt wird.

Der Erfindung liegt daher die Aufgabe zugrunde, ein unbeabsichtigtes Herunterfallen des herausgeschwenkten Bremssattels mittels an der Bremseinrichtung angebauter Sicherungsmittel zu verhindern.

Diese Aufgabe wird gemäss der Merkmale des Hauptanspruchs bzw. der Nebenansprüche gelöst.

Gemäss einer vorteilhaften Ausgestaltung des Erfindungsgedankens ist die Halterung zweckmässigerweise eine im Bereich des Führungsauges des Bremssattels ausgebildete Erhöhung, die an einem am Bremsträger angeordneten Stift zur Anlage kommt. Die Ausbildung einer Erhöhung am Führungsauge des Bremssattels und die Anordnung eines Stiftes am Bremsträger lässt sich einfach durchführen, ohne den Aufbau der Scheibenbremse grundsätzlich zu ändern und insbesondere ohne in das Führungssystem zwischen Bremsträger und Bremssattel einzugreifen. Dieses ist insbesondere deshalb vorteilhaft, da, wie in der DE-A-2 649 627 beschrieben ist, die Lager der Führungsbolzen bei einem Belagwechsel vor Verschmutzung gesichert sein müssen, um die Funktionstüchtigkeit der Scheibenbremse nicht zu beeinträchtigen.

In einfacher Weise kann die Erhöhung eine am Führungsauge des Bremssattels einstückig mit dem Bremssattel ausgebildete Gussnase sein. Genauso einfach lässt sich als Stift ein Kerbnagel, insbesondere ein Halbrandkerbnagel verwenden, der in dem Bremsträger drehfest gehalten ist.

Gemäss einer besonders bevorzugten Ausführungsform der Erfindung ist vorgesehen, dass in Schwenkrichtung des Bremssattels nach dem ersten Anschlag vor der Totpunktlage des Bremssattels ein zweiter Anschlag angeordnet ist. Damit wird erreicht, dass der Bremssattel nicht in eine Lage geschwenkt wird, in der er selbst stehenbleibt und ohne zusätzliche Verdrehsicherung durch Anstossen leicht herunterklappen kann, sondern zur Halterung in Eingriff mit dem ersten Anschlag gebracht werden muss.

Der erste und zweite Anschlag können zwei auf dem Führungsauge des Bremssattels angeordnete Gussleisten sein. Damit hat der an dem feststehenden Teil angeordnete Stift eine ausreichende Anlagefläche.

In ganz besonders vorteilhafter Ausgestaltung des Erfindungsgedankens sind die beiden Anschläge so auf dem Führungsauge des Bremssattels angeordnet, dass bei einem Verschwenken des Bremssattels um einen Drehwinkel, der so gross ist, dass die Bremsbeläge noch nicht entnommen werden können, der erste Anschlag an dem an dem Bremsträger angeordneten Stift zur Anlage kommt, dass nach einem Herausziehen des Bremssattels entlang des Führungsbolzens der Bremssattel an dem gegenüber dem zweiten Anschlag an dieser Seite kürzeren ersten Anschlag vorbei bis zu dem zweiten Anschlag weiter verschwenkbar ist und dass der auf dem Führungsbolzen zurückgeschobene Bremssattel bei einer Abwärtsbewegung an der anderen Seite des ersten Anschlags zur Anlage kommt. Bei einer derartigen Ausgestaltung ist sichergestellt, dass in keinem Fall, auch bei einem Bedienungsfehler, der Bremssattel herunterfallen kann.

Um ein seitliches Herunterfallen des auf dem ersten Anschlag aufliegenden Bremssattels zu gewährleisten, ist der als Gussleiste ausgebildete erste Anschlag gegenüber dem zweiten Anschlag schräg auf dem Führungsauge des Bremssattels angeordnet. Damit wird ein zusätzlicher Sperreffekt erzielt. Dieser wird noch unterstützt dadurch, dass an dem Stift gemäss einer Weiterbildung des Erfindungsgedankens eine angebogene Nase ausgebildet ist. Diese hakt sich bei ihrem Eingriff mit der als erster Anschlag dienenden Gussleiste hinter diese ein.

Gemäss einer weiteren Ausgestaltung des Erfindungsgedankens können die als Gussleisten ausgebildeten ersten und zweiten Anschläge parallel zueinander angeordnet sein. In diesem Fall kann die Ausbildung der angebogenen Nase an dem Stift entfallen.

Eine weitere einfache Ausgestaltung sieht vor, dass die beiden Anschläge Gussnocken sind, die mit dem Führungsauge des Bremssattels einstückig ausgebildet sind.

Sofern die Anschläge nicht aus einem Gussteil des Bremssattels gebildet sein sollen, kann die Halterung gemäss einer anderen Lösung der erfindungsgemässen Aufgabe auch aus einer Zahnscheibe bestehen, in die ein Sicherungsblech eingreift.

Gemäss einer ebenfalls bevorzugten Ausgestaltung der Erfindung ist vorgesehen, dass der erste Anschlag eine am Bremsträger ausgebildete Leiste ist, an die beim Verschwenken des Bremssattels eine am Führungsauge des Bremssattels angeordnete Leiste zur Anlage kommt, dass die Leiste am Bremsträger so lang ist, dass bei einem Verschieben des Bremssattels auf dem Führungsbolzen über die Länge der Leiste hinaus der Bremssattel an der Leiste vorbei weiter verschwenkbar ist, dass der Bremssattel nach dieser Schwenkbewegung auf dem Führungsbolzen zurückschiebbar ist und bei einer Abwärtsbewegung an der anderen Seite des ersten Anschlags zur Anlage kommt. Bei dieser Ausgestaltung ist kein zusätzlicher Stift mehr nötig, sondern es reichen die beiden an dem Bremssattel und dem Bremsträger angegossenen Anschläge zur Absicherung der Verschwenkbewegung des Bremssattels aus.

Vorteilhafterweise ist an mindestens einem der Enden der am Bremssattel angebrachten Leiste eine Nase ausgebildet. Diese dient als Anschlag mit der Leiste an dem Bremsträger, so dass zwangsläufig der Bremssattel gegen eine axiale Verschiebung auf dem Führungsbolzen gesichert ist.

Als besonders zweckmässig hat es sich erwiesen, dass die Anschläge so angeordnet sind, dass die hieran anschlagenden Bauteile zum Anschlag kommen, bevor der Bremssattel über seinen Totpunkt gedreht ist. Damit muss der Einrastvorgang zwangsläufig ausgeführt werden, um den Bremssattel am Herunterfallen zu hindern.

Gemäss einer weiteren Ausgestaltung des Erfindungsgedankens ist vorgesehen, dass die Erhöhung ein Nocken einer um das Führungsauge des Bremssattels gelegten Nockenfeder ist. Diese Ausführungsform lässt sich auch nachträglich an einer Scheibenbremse anbringen.

Vorteilhafterweise ist bei dieser Ausgestaltung der Stift erfindungsgemäss so im Bremsträger angeordnet, dass der Bremssattel über seinen Totpunkt geschwenkt werden muss, damit der Stift mit dem Nocken der Nockenfeder in Eingriff tritt. Erst wenn eine zusätzliche Kraft aufgewendet wird, die grösser ist als die Nockenfederkraft, gibt die Feder nach und ihr Nocken schlüpft unter dem Stift hindurch. Bei dieser Ausgestaltung liefert die Nockenfeder also nur eine zusätzliche Haltekraft, die das eigene, den Bremssattel in seiner geöffneten Stellung haltende Kraftmoment des Bremssattels lediglich verstärkt.

Die Nockenfeder kann erfindungsgemäss sowohl als Drahtfeder, als auch als Blattfeder ausgebildet sein.

In Weiterbildung der Erfindungsgedankens kann der erste Anschlag auch ein am Führungsauge des Bremssattels angeordneter Nocken sein, der mit einem am Bremsträger angeordneten Federelement in Eingriff gelangt. In diesem Fall, in dem das an dem feststehenden Teil der Scheibenbremse angeordnete Federelement nur eine zusätzliche Kraft auf den sich über dem Totpunkt befindlichen, an sich selbst haltenden Bremssattel aufbringen soll, ist der feste Nocken am drehenden Teil der Scheibenbremse angebracht.

Zweckmässigerweise ist das Federelement dabei ein im Bremsträger in einem Gummiteil gelagerter Stift. Es kann als Federelement aber auch ein im Bremsträger angeordneter selbstfedernder Stift vorgesehen sein.

Gemäss einer weiteren Ausgestaltung der Erfindung ist der erste Anschlag ein innerhalb des Führungsauges des Bremssattels am feststehenden Teil der Scheibenbremse angeordneter Nokken, an dem ein durch eine Bohrung im Bremssattel geführter federbelasteter Stift angreift. Da die gesamte Verdrehsicherung damit im Gehäuse der Scheibenbremse unsichtbar angeordnet ist, kann diese Ausführungsform auch kleiner gebaut werden.

Eine weitere Lösung der erfindungsgemässen Aufgabe sieht vor, dass die Halterung eine Torsionsfeder ist, die mit ihrem einen Ende am feststehenden Teil der Scheibenbremse befestigt ist, danach um das Führungsauge des Bremssattels gewickelt und schliesslich mit ihrem anderen Ende am drehenden Teil der Scheibenbremse befestigt ist. Da die Torsionsfeder ein gegen die Fallrichtung des Bremssattels gerichtetes Drehmoment aufweist, bewirkt sie bei aufgeklapptem Bremssattel ein zusätzliches Andrückmoment gegen den Endanschlag des Bremssattels. Bei einem Anstossen des Bremssattels drückt die Torsionsfeder den Bremssattel stets in seine Aufklapp-Endlage zurück. Somit wird ein Herunterfallen verhindert.

Eine weitere Lösung der erfindungsgemässen Aufgabe sieht vor, dass der Bremssattel im Bereich der Schwenkachse ein zusätzliches Reib- oder Ratschenlager aufweist. Diese Lager verhindern ein unkontrolliertes Zurückklappen während der Durchführung von Arbeiten an der geöffneten Scheibenbremse, da die den Bremssattel in jeder beliebigen Lage festhalten. Gleichzeitig ist gewährleistet, dass der Bremssattel sich in axialer Richtung frei bewegen kann oder zumindest nur minimale Reibkräfte zu überwinden sind.

Gemäss einer bevorzugten Ausführungsform, bei der der als Schwenkachse dienende Führungsbolzen eine Hülse ist, die mit ihrem einen Ende an dem Bremsträger befestigt ist und am anderen Ende eine Schraube trägt, ist erfindungsgemäss vorgesehen, dass in einem den Führungsbolzen aufnehmenden Führungsauge des Bremssattels eine Bohrung ausgebildet ist, deren Durchmesser grösser als der Durchmesser der Führungsbohrung im Bremssattel ist, dass in die Bohrung eine Büchse eingepresst ist, deren Durchmesser grösser als der Durchmesser der Bohrung ist und die längsverlaufende Sicken aufweist, und dass an der Schraube ein Federtopf befestigt ist, der längsverlaufende Erhebungen aufweist, die den Sicken in der Büchse entsprechen und in diese eingreifen. Bei einem Verschwenken des Bremssattels erzielen die ineinandergreifenden Sicken und Erhebungen eine Ratschenwirkung, so dass einem herunterfallenden Bremssattel ein Ratschenmoment entgegenwirkt. Falls dieses grösser als der Rückfallmoment des Bremssattels ist, bleibt dieser in jeder beliebigen Stellung stehen. Die freie Verschiebbarkeit des Bremssattels in axialer Richtung ist gewährleistet, da sich die Erhebungen entlang der Sicken erstrecken. Eine besonders zweckmässige Ausgestaltung dieses erfindungsgemässen Ratschenlagers sieht vor, dass die Büchse das Führungsauge des Bremssattels abschliesst und somit eine Schutzkappe bildet.

Gemäss einer weiteren Ausgestaltung des Erfindungsgedankens, bei der der als Schwenkachse dienende Führungsbolzen eine Hülse ist, die mit ihrem einen Ende an dem Bremsträger befestigt ist und am anderen Ende eine Schraube mit Aussensechskant trägt, ist erfindungsgemäss vorgesehen, dass in einem den Führungsbolzen aufnehmenden Führungsauge des Bremssattels eine Bohrung ausgebildet ist, deren Durchmesser grösser als der Durchmesser der Führungsbohrung im Bremssattel ist, dass in diese Bohrung eine Büchse mit Innensechskant eingesetzt ist, der dem Aussensechskant der Schraube entspricht, so dass die Schraube in axialer Richtung frei beweglich ist und dass die in Drehrichtung des Bremssattels von der Schraube festgehaltene Büchse bei einer Drehung des Bremssattels ein Reibungsmoment erzeugt. Damit wird eine Zusatzeinrichtung zum Verhindern des Herunterfallens des geöffneten Bremssattels geschaffen, bei der die freie Beweglichkeit des Bremssattels in axialer Richtung nicht beeinträchtigt ist.

Eine bevorzugte Ausführungsform der Erfindung sieht vor, dass die Wandstärke der Büchse etwa der Ausnehmung der Bohrung in der Führungsbohrung des Bremssattels entspricht, und dass die Büchse von einer Feder mit ihrer Stirnfläche gegen die Stirnwand der Bohrung gedrückt wird, wo sie bei Drehung des Bremssattels eine Reibung erzeugt. Dadurch, dass die Büchse von der mit der Schraube fest verbundenen Hülse festgehalten wird, kann sie sich bei einem Hochklappen des Bremssattels nicht mitdrehen und erzeugt damit auf einfache Weise ein Reibungsmoment, das dem Rückfallmoment des Bremssattels entgegengerichtet ist.

Dieses lässt sich besonders einfach realisieren, wenn die Feder eine Tellerfeder ist, die sich zweckmässigerweise über eine Scheibe an der Büchse abstützt. Die Grösse der Reibung wird dabei durch die Stärke der Tellerfeder bestimmt.

Gemäss einer weiteren Ausgestaltung des Erfindungsgedankens ist vorgesehen, dass die Büchse eine Federhülse ist, deren Aussendurchmesser grösser als der Innendurchmesser der Bohrung ist, und dass die Federhülse unter Vorspannung in die Bohrung eingesetzt ist. Dadurch, dass der Aussendurchmesser der Federhülse grösser als der Innendurchmesser der Bohrung in dem beweglichen Teil der Scheibenbremse ist, wird eine Federkraft nach aussen erzeugt. Wird nun der Bremssattel gedreht, muss die Reibung zwischen der Aussenfläche der Federhülse und der Innenfläche der Bohrung überwunden werden; somit wird zur Erzeugung des ein Herunterfallen des Bremssattels verhindernden Reibungsmomentes nur ein einziges Bauteil in Form der vorgespannten Federhülse benötigt.

Diese Federhülse ist vorteilhafterweise eine geschlitzte, geschlossene Hülse, eine solche lässt sich leicht herstellen und einfach in die Bohrung einsetzen.

Zur Material- und Gewichtsersparung kann gemäss einer noch weiteren Ausgestaltung des Erfindungsgedankens die Federhülse ein Blechteil mit einer nach innen gerichteten Abkantung sein, wobei das Blechteil an dem freien Ende der Abkantung einen Innensechskant aufweist, der dem Aussensechskant der Schraube entspricht und wobei die Abkantung über die gesamte Länge des Schraubenkopfes an diesem entlangläuft. Obwohl für die massive Führungshülse bei dieser Ausführungsform nur ein einfaches Blechteil benötigt wird, so lässt sich dennoch damit die gestellte Aufgabe lösen, da das unter Vorspannung in die Bohrung eingesetzte Blechteil bei einem Drehen des Bremssattels ebenfalls ein Reibungsmoment erzeugt.

Um eine noch billigere Lösung zu schaffen, indem eine Schraube mit einem recht schmalen Kopf verwendet werden kann, ist gemäss einer noch weiteren Ausgestaltung der Erfindung vorgesehen, dass die Federhülse gestuft ausgeführt ist, dass der an der Stirnwand der Bohrung gelegene Abschnitt der Federhülse an der Innenwand der Bohrung unter Vorspannung anliegt und dass sich an diesen Abschnitt mit grossem Durchmesser nach einer Abstufung ein parallel verlaufender Abschnitt kleineren Durchmessers mit Innensechskant anschliesst, der mit dem Aussensechskant der Schraube in Eingriff tritt. Damit stützt sich die Federhülse an der gesamten Umfangsfläche des Kopfes der Sechskantschraube ab.

Gemäss einer noch weiteren, besonders bevorzugten Ausführungsform der Erfindung ist vorgesehen, dass die Federhülse so ausgebildet ist, dass ein einen Innensechskant aufweisender Abschnitt der Federhülse sich über den gesamten Bewegungsweg der Schraube bis zur Stirnwand der Bohrung erstreckt, dass sich hieran ein senkrechter Abschnitt anschliesst, der in einen parallel zum ersten Abschnitt verlaufenden zweiten Abschnitt übergeht, dessen Aussendurchmesser grösser als der Innendurchmesser der Bohrung ist. Diese sehr einfach geformte Federhülse gewährleistet, dass der Kopf der Sechskantschraube entlang seines axialen Bewegungsweges immer geführt ist.

Bei den Ausführungsformen, bei denen die in die Bohrung in dem Bremssattel eingesetzte Büchse eine Federhülse ist, wird die Federhülse durch eine das Führungsauge des Bremssattels abschliessende Schutzkappe in der Bohrung gehalten. Damit braucht keine zusätzliche Befestigung für die Federhülse mehr vorgesehen werden und sowohl die Federhülse als auch die Schutzkappe können als Blechteile einfach hergestellt werden.

Die Erfindung wird nachfolgend anhand von Ausführungsbeispielen näher erläutert, die in der Zeichnung dargestellt sind.

Es zeigen:

Fig. 1 eine Ansicht einer Schwimmfaustsattel-Scheibenbremse mit hochgeklapptem Bremssattel und einer ersten erfindungsgemässen Verdrehsicherung des Bremssattels,

Fig. 2 eine Teilansicht einer Schwimmfaustsattel-Scheibenbremse gemäss einer zweiten Ausführungsform einer Verdrehsicherung für den Bremssattel,

Fig. 3 einen Teilschnitt durch den erfindungswesentlichen Teil der Ausführungsform gemäss Fig. 2,

Fig. 4 eine Fig. 2 entsprechende Ansicht einer Schwimmfaustsattel-Scheibenbremse mit einer dritten Ausführungsform einer erfindungsgemässen Verdrehsicherung,

Fig. 5 in teilweise geschnittener Darstellung eine Ansicht in Richtung des Pfeiles X in Fig. 4,

Fig. 6 eine Sicht des in der Ausführungsform gemäss Fig. 5 verwendeten Stiftes,

Fig. 7 eine Fig. 1 entsprechende Ansicht einer Schwimmfaustsattel-Scheibenbremse zur Veranschaulichung der Anordnung der in den Fig. 4 bis 6 dargestellten Ausführungsform bei einer derartigen Scheibenbremse,

Fig. 8 in teilweiser geschnittener Darstellung eine Ansicht eines Teiles eines Bremsträgers und eines dazugehörigen Bremssattels mit einer vierten erfindungsgemässen Ausführungsform einer Verdrehsicherung,

Fig. 9 eine Fig. 8 entsprechende Darstellung, wobei der hochgeklappte Bremssattel an dem Bremsträger angreift,

Fig. 10 eine Fig. 7 entsprechende Darstellung einer Schwimmfaustsattel-Scheibenbremse zur Veranschaulichung einer fünften Ausführungsform einer erfindungsgemässen Verdrehsicherung,

Fig. 11 eine Fig. 10 entsprechende Darstellung einer sechsten Ausführungsform einer erfindungsgemässen Verdrehsicherung,

Fig. 12 und 13 zwei Federelemente zur Verwendung bei einer Ausführungsform gemäss Fig. 11,

Fig. 14 einen Teilschnitt durch eine Schwimmfaustsattel-Scheibenbremse mit einer in dem Gehäuse angeordneten Verdrehsicherung (siebte Ausführungsform),

Fig. 15 einen Schnitt entlang der Linie XV–XV in Fig. 14,

Fig. 16 eine Fig. 11 entsprechende Ansicht einer Schwimmfaustsattel-Scheibenbremse mit einer achten Ausführungsform einer erfindungsgemässen Verdrehsicherung für den Bremssattel und

Fig. 17 in teilweise geschnittener Darstellung eine Fig. 14 entsprechende Ansicht einer Schwimmfaustsattel-Scheibenbremse mit einer neunten erfindungsgemässen Ausführungsform einer Verdrehsicherung für den Bremssattel,

Fig. 18 eine Ansicht einer Schwimmfaustsattel-Scheibenbremse mit hochgeklapptem Bremssattel zur Veranschaulichung der Lage der erfindungsgemässen Reib- und Ratschenlager,

Fig. 19 in teilweise geschnittener Darstellung eine Ansicht einer Schwimmfaustsattel-Scheibenbremse mit einer zehnten Ausführungsform,

Fig. 20 einen Schnitt entlang der Linie III–III in Fig. 19,

Fig. 21 eine Fig. 19 entsprechende Darstellung einer elften Ausführungsform,

Fig. 22 einen Schnitt entlang der Linie V–V in Fig. 21,

Fig. 23 eine Fig. 19 entsprechende Darstellung einer zwölften Ausführungsform,

Fig. 24 einen Schnitt entlang der Linie VII–VII in Fig. 6,

Fig. 25 eine Fig. 19 entsprechende Darstellung einer dreizehnten Ausführungsform,

Fig. 26 einen Schnitt entlang der Linie IX–IX in Fig. 8,

Fig. 27 eine Fig. 19 entsprechende Darstellung einer vierzehnten Ausführungsform und

Fig. 28 eine Fig. 19 entsprechende Darstellung einer fünfzehnten Ausführungsform.

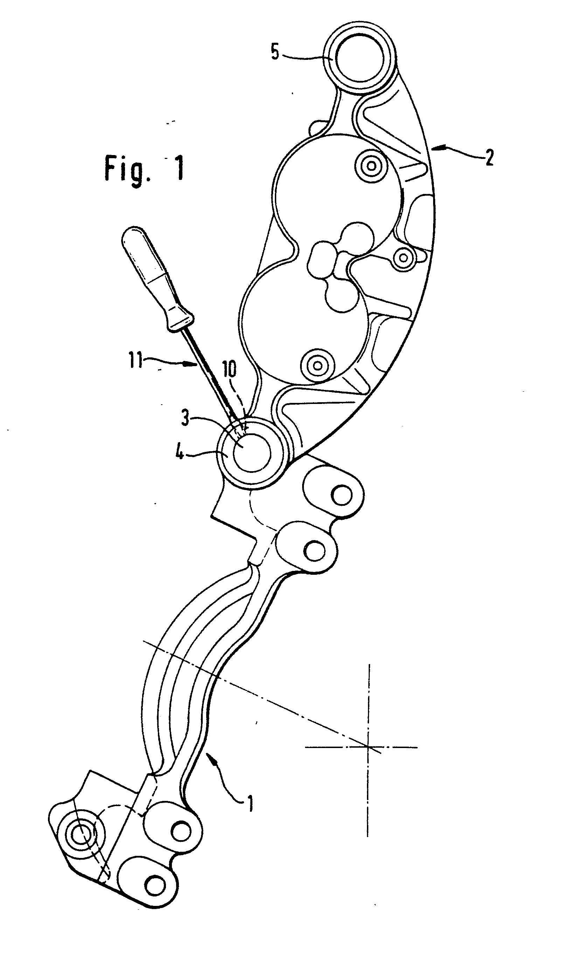

Die in den Fig. 1 bis 15 dargestellte Schwimmfaustsattel-Scheibenbremse besteht in allen Ausführungsformen aus einem Bremsträger 1, an dem ein Bremssattel 2 entlang zweier Führungsbolzen 3 axial verschiebbar gelagert ist.

Das Lagerelement 4 des Führungsbolzens 3 ist in einem Führungsauge 5 in dem Bremssattel 2 angeordnet. Im übrigen ist die Scheibenbremse wie üblich aufgebaut, d.h. der Bremssattel 2 umschliesst Bremsbeläge 6 und 7 und eine dazwischen angeordnete Bremsscheibe 8. Der innere Bremsbelag 6 wird durch in einem Betätigungszylinder 9 angeordnete Kolben gegen die Bremsscheibe 8 gedrückt. Gleichzeitig wirkt die Reaktionskraft gegen den Zylinderboden des Bremssattels 2 und verschiebt diesen auf den beiden Führungsbolzen 3 zur Fahrzeugmitte hin, wodurch der gegenüberliegende Bremsbelag 7 ebenfalls an die Bremsscheibe 8 gepresst wird.

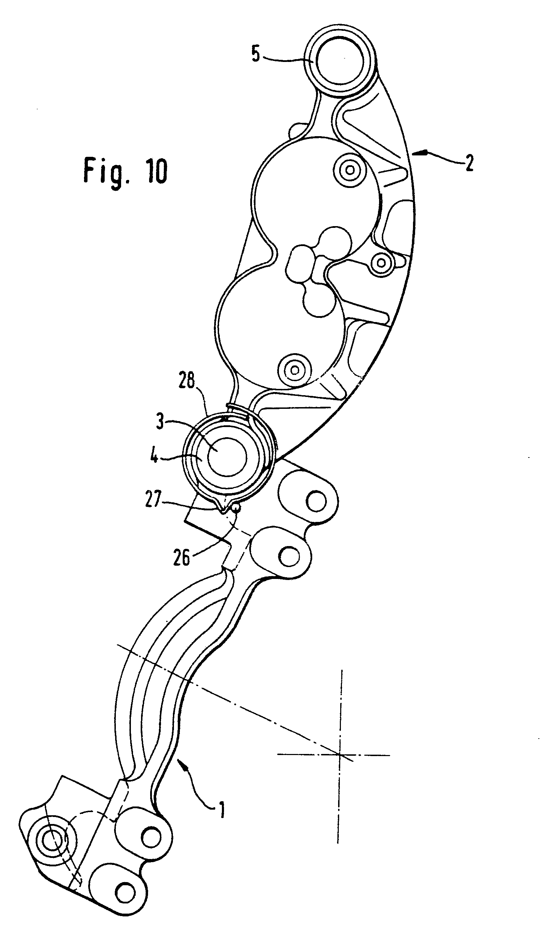

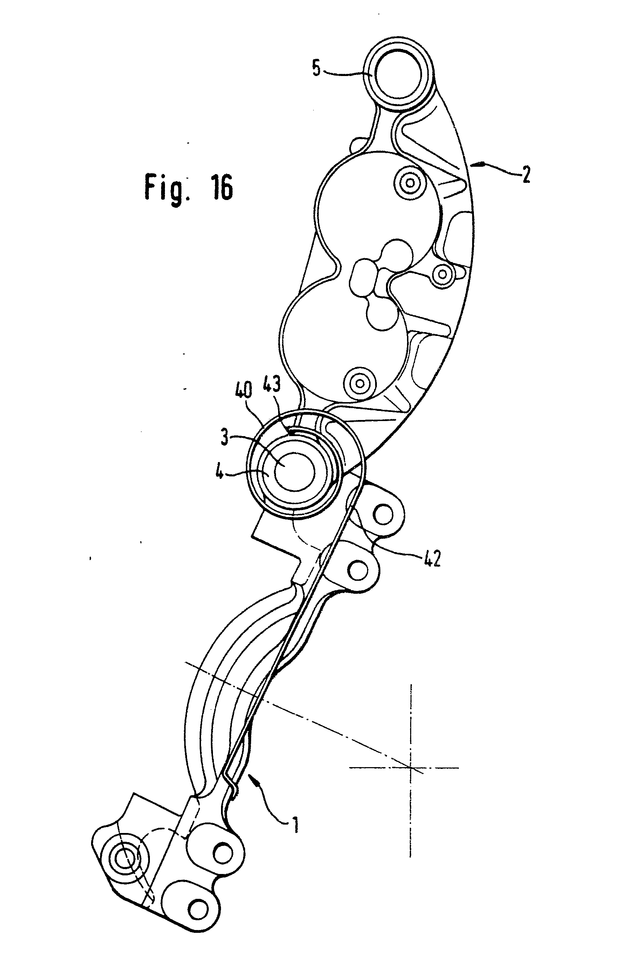

Um eine Inspektion der Scheibenbremse vornehmen zu können, insbesondere die Bremsbeläge auswechseln zu können, muss der Bremssattel 2 um den als Schwenkachse dienenden Führungsbolzen 3 hochgeklappt werden. Nach Überschreiten eines Totpunktes bleibt der Bremssattel 2 von selbst auf dem unter einem Winkel von 30° aufgehängten Bremsträger 1 stehen. Diese Stellung zeigen die Fig. 10, 11 und 16.

Auch wenn der Bremssattel 2 recht schwer ist und damit durch sein Eigengewicht in der geöffneten Stellung eine relativ stabile Lage aufweist, so kann doch nicht ausgeschlossen werden, dass bei einem unbeabsichtigten Anstossen des Bremssattels dieser runterfällt und einen an der Scheibenbremse arbeitenden Mechaniker erheblich verletzt. Es werden daher nachfolgend verschiedene Ausgestaltungen von Verdrehsicherungen für einen Bremssattel beschrieben. Diesen allen ist gemeinsam, dass der Bremssattel 2 nach seinem Herausschwenken durch eine zusätzliche Halterung im Bereich des Führungsauges 5 des Bremssattels 2 gegen ein unbeabsichtigtes Herunterfallen gesichert ist.

In der Ausführungsform gemäss Fig. 1 ist hierfür in dem Bremsträger 1 eine Bohrung 10 vorgesehen, in die ein Absicherungswerkzeug 11, das hier ein Schraubendreher ist, eingesteckt wird, wenn der Bremssattel 2 über die Bohrung 10 hinweggeklappt ist. Fig. 1 zeigt den Stand der Technik gemäss US-A-4 319 670.

Die Bohrung 10 sollte so in dem Bremsträger 1 angeordnet sein, dass der Bremssattel 2 nicht über seinen Totpunkt hinaus in seiner Endlage geschwenkt wird, sondern bereits vor dem Totpunkt an dem Absicherungswerkzeug zur Anlage kommt. Um ein zu weites Schwenken des Bremssattels 2 zu verhindern, kann an dem Bremsträger ein zusätzlicher Anschlag vorgesehen sein.

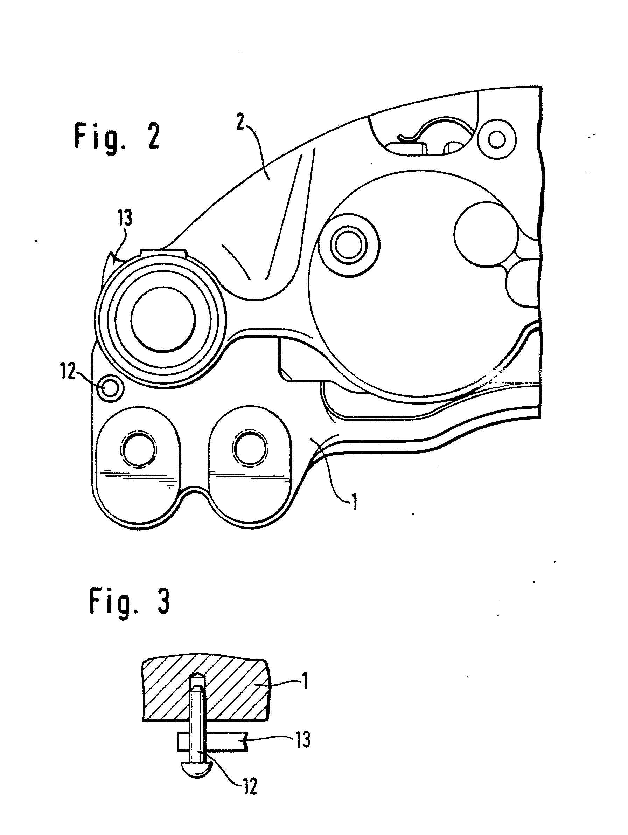

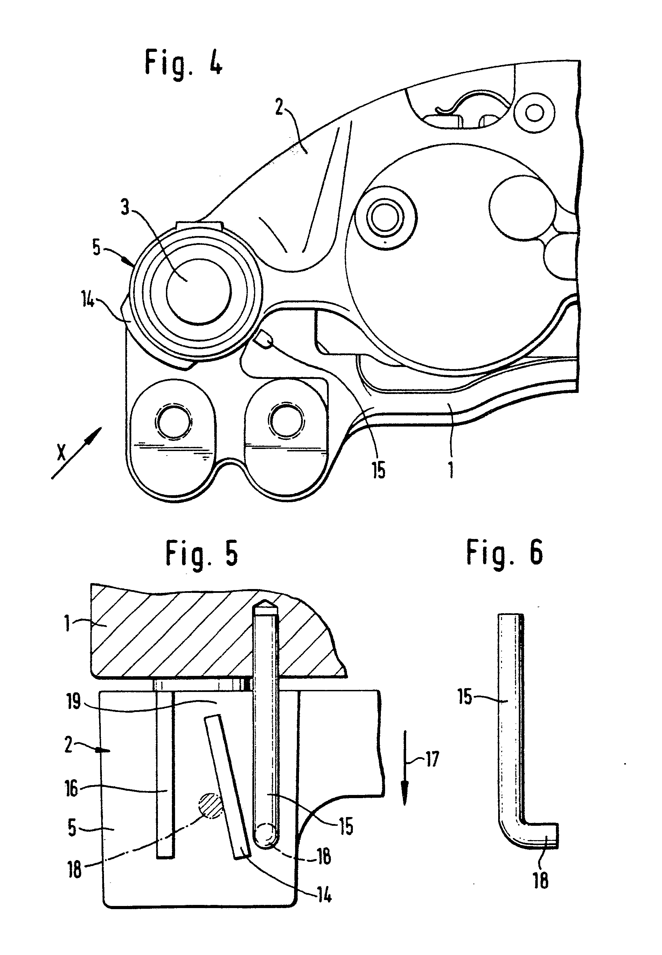

In der in den Fig. 2 und 3 dargestellten Ausführungsform ist an dem Bremsträger 1 ein Stift 12 in Form eines Halbrandkerbnagels angeordnet, an der der aufgeklappte Bremssattel 2 über einen an diesem ausgebildeten ersten Anschlag in Form einer Gussnase 13 drehfest gehalten wird.

Eine dritte Ausführungsform zeigen die Fig. 4 bis 6. Auch hier ist auf dem Führungsauge 5 des Bremssattels 2 ein erster Anschlag 14 vorgesehen, der bei einem Verschwenken des Bremssattels 2 an einem am Bremsträger 1 angeordneten Stift 15 zur Anlage kommt.

Wie aus Fig. 5 ersichtlich ist, ist der als Gussleiste ausgebildete erste Anschlag 14 gegenüber einem ebenfalls als Gussleiste ausgebildeten zweiten Anschlag 16 schräg auf dem Führungsauge 5 des Bremssattels 2 angeordnet.

Die erste Anschlagleiste 14 ist so auf dem Führungsauge 5 des Bremssattels 2 angeordnet, dass bei einem Verschwenken des Bremssattels 2 um einen Drehwinkel, der so gross ist, dass die Bremsbeläge gerade noch nicht entnommen werden können, der erste Anschlag 14 an dem an dem Bremsträger 1 angeordneten Stift 15 zum Anschlag kommt. Da sich der Bremssattel noch vor der Totpunktlage befindet, ist man gezwungen, den Bremssattel 2 in Richtung des Pfeiles 17 in Fig. 5 herauszuziehen. Wenn eine an dem Stift 15 angebogene Nase 18 den mit 19 bezeichneten freien Raum auf dem Bremssattel 2 erreicht, lässt sich dieser weiter verschwenken, bis er an der zweiten Anschlagleiste 16 zur Anlage kommt. Diese Anlage ist noch vor dem Totpunkt des Bremssattels.

Damit der Bremssattel 2 nun in seiner geöffneten Stellung gehalten werden kann, muss er auf den Führungsbolzen so weit zurückgeschoben werden, bis er mit der ersten Anschlagleiste 14 in Eingriff treten kann. Wegen der geneigten Anordnung dieser ersten Anschlagleiste 14 ist sichergestellt, dass auch bei einem Bedienungsfehler der Bremssattel 2 nicht herunterfallen kann.

Die beiden aus Guss bestehenden Anschlagleisten 14 und 16 können gemäss einer nicht dargestellten Ausführungsform auch parallel zueinander angeordnet sein. In diesem Fall kann an dem Stift 15 die angebogene Nase 18 entfallen.

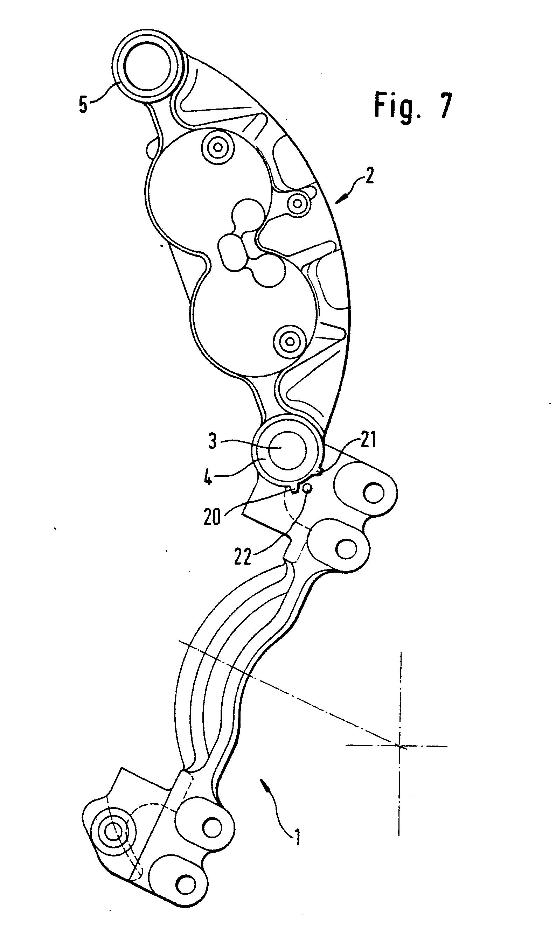

In Fig. 7 ist eine Ausführungsform gezeigt, bei der der erste und zweite Anschlag durch Gussnocken 20 und 21 gebildet sind, die mit einem am Bremsträger 1 angeordneten Stift 22 zur Anlage kommen. Bei dieser Gesamtansicht einer Schwimmfaustsattel-Scheibenbremse ist der Bremssattel 2 nicht über seine tote Lage geschwenkt.

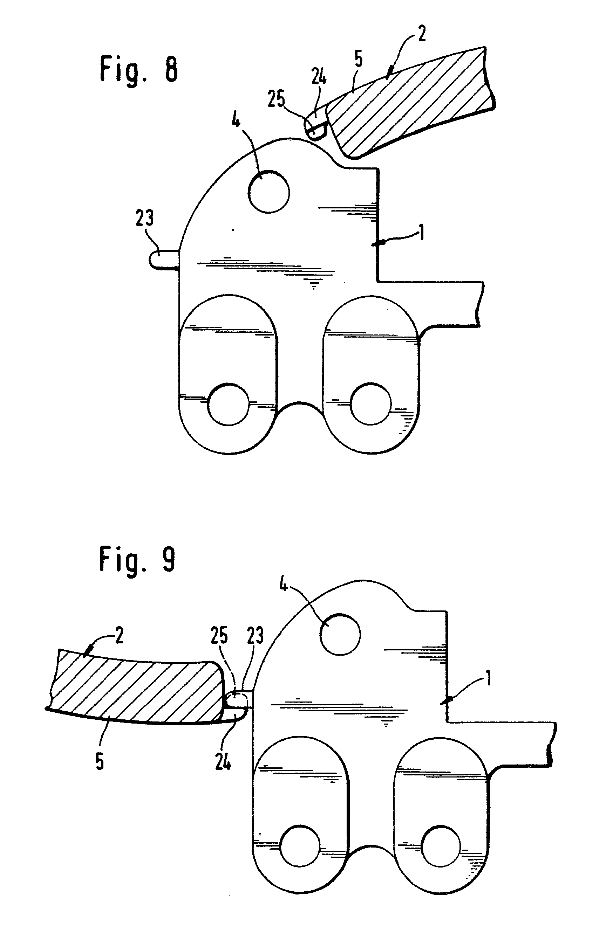

Bei der in den Fig. 8 und 9 dargestellten Ausführungsform ist ein zweiter Anschlag eine am Bremsträger 1 angegossene Leiste 23, an die beim Verschwenken des Bremssattels 2 die am Führungsauge 5 des Bremssattels 2 angeordnete erste Leiste 24 zur Anlage kommt. Danach wird der Bremssattel 2 auf das maximal mögliche Mass in Verschleissrichtung auf dem Führungsbolzen 3 ausgezogen, so dass die Leiste 24 an der Leiste 23 vorbeigeführt werden kann. Danach wird der Bremssattel 2 wieder so weit wie möglich auf dem Führungsbolzen 3 zurückgeschoben. Bei einem Zurückschwenken des Bremssattels 2 liegt damit die an dem Bremssattel angeordnete Leiste 24 an der an dem Bremsträger 1 angeordneten Leiste 23 an und verhindert, dass der Bremssattel 2 sich weiter nach unten bewegen kann, womit er gegen ein Herabfallen gesichert ist.

An der Leiste 23 ist zusätzlich eine Nase 25 angegossen, die als Anschlag mit der Leiste 23 dient. Damit ist der Bremssattel 2 auch gegen eine axiale Verschiebung auf dem Führungsbolzen 3 gesichert.

Die Leisten 23 und 24 sind so angeordnet, dass sie zum Anschlag kommen, bevor der Bremssattel 2 über seinen Totpunkt gedreht ist. Damit muss der Einrastvorgang notwendigerweise ausgeführt werden, um den Bremssattel 2 an einem Herunterfallen zu hindern.

Eine weitere Ausführungsform zeigt Fig. 10 in der ein am Bremsträger 1 angeordneter Stift 26 mit einem Nocken 27 einer Nockenfeder 28 in Eingriff tritt. Die als Drahtfeder ausgebildete Nockenfeder 28 ist so um das Führungsauge 5 des Bremssattels 2 gelegt, dass ihr Nocken 27 dann mit dem Stift 26 zur Anlage kommt, wenn sich der Bremssattel 2 in seiner Endlage befindet.

Ein Herunterklappen des Bremssattels 2 ist nur möglich, wenn die am Bremssattel angreifende Kraft so gross ist, dass die Nockenfeder 28 nachgibt und ihr Nocken 27 unter dem Stift 26 hindurchschlüpft. Die Nockenfeder 28 braucht also nicht die gesamte Last des Bremssattels 2 aufnehmen, sondern diesen nur durch eine zusätzliche Kraft an einem unbeabsichtigten Herunterklappen zu hindern.

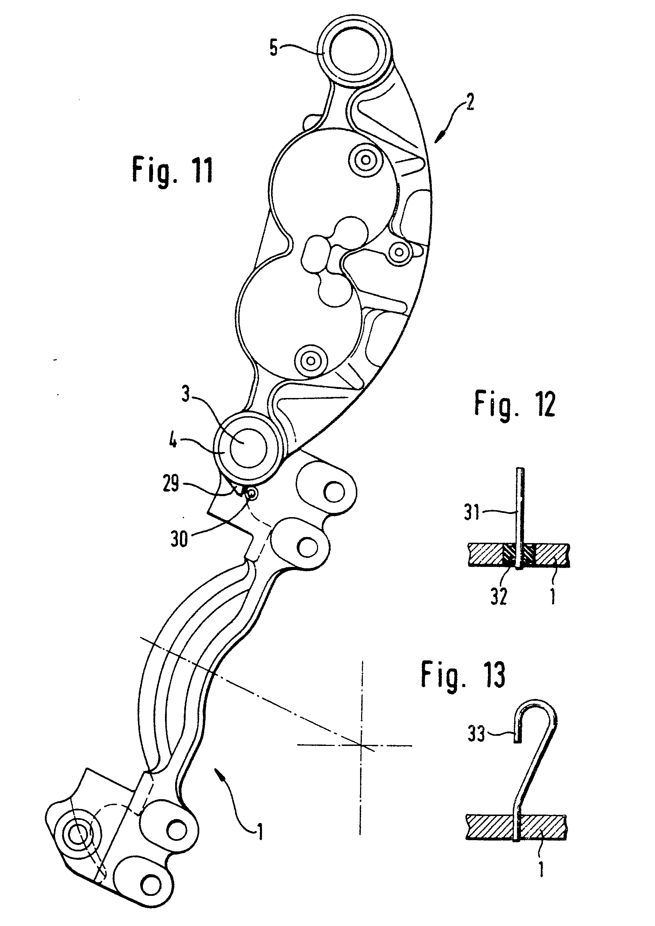

In den in den Fig. 11 bis 13 dargestellten Ausführungsformen ist als erster Anschlag ein am Füh-

rungsauge 5 des Bremssattels 2 angeordneter Nocken 29 vorgesehen, der mit einem am Bremsträger 1 angeordneten Federelement 30 in Eingriff gelangt. Auch bei dieser Ausführungsform ist der Bremssattel 2 über seinen Totpunkt hinaus zu verschwenken und erhält durch das an dem Nocken 29 anliegende Federelement nur ein zusätzliches Haltemoment. Wenn die an dem Bremssattel 2 angreifende Kraft einen gewissen Betrag überschreitet, so wird der Nocken 29 das nachgiebige Federelement 30 zur Seite drücken und an diesem vorbeigeführt werden.

Als Federelement 30 kann ein Stift 31 vorgesehen sein, der in dem Bremsträger 1 in einem Gummiteil 32 gelagert ist (siehe Fig. 12). Es kann aber auch ein selbstfedernder Stift 33 verwendet werden, der in der in Fig. 13 gezeigten Ausführungsform gekrümmt ist.

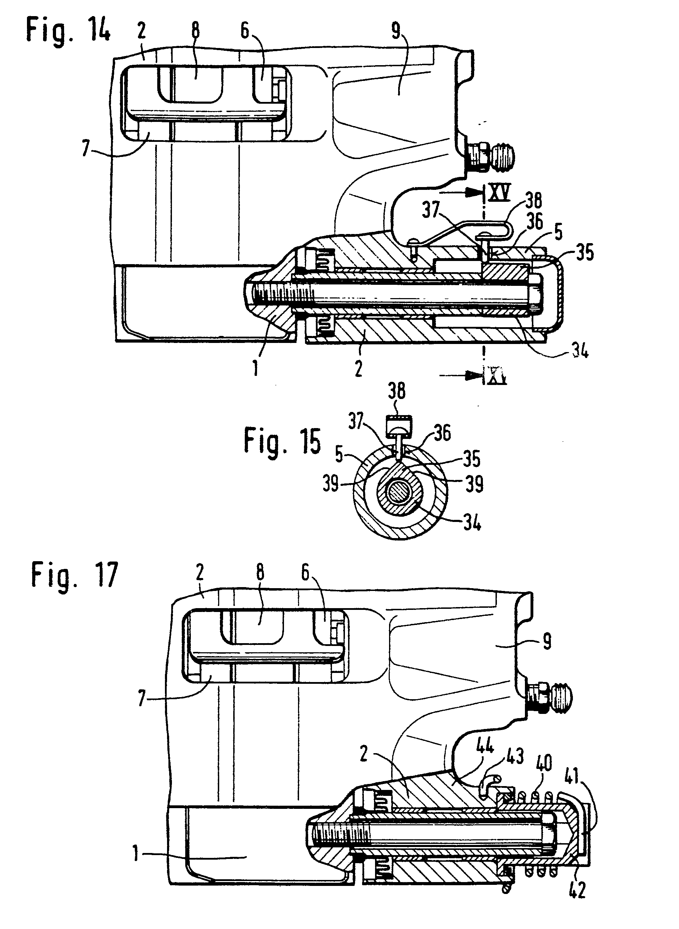

In den Fig. 14 und 15 ist eine besonders kleinbauende Ausführungsform dargestellt, bei der der erste Anschlag ein innerhalb des Führungsauges 5 des Bremssattels 2 an einem an dem Bremsträger 1 befestigten feststehenden Teil 34 angeordnete Nocken 35 ist, an dem ein durch eine Bohrung 36 im Bremssattel 2 geführter federbelasteter Stift angreift. Der Stift 37 wird durch eine am Bremssattel 2 befestigte Feder 38 gehalten und schlägt an dem Nocken 35, der an dem feststehenden Teil 34 ausgebildet ist, an. Um den Bremssattel 2 herunterklappen zu können, muss auf diesen eine Kraft ausgeübt werden, die ausreicht, um den Stift 37 an der Auflaufschräge 39 des Nockens 35 entlangzubewegen, was nur möglich ist, wenn der Stift 37 gleichzeitig gegen die Kraft der Feder 38 aus der Bohrung 36 herausgedrückt wird.

Schliesslich ist eine Verdrehsicherung für einen Bremssattel möglich, bei dem die Halterung für den Bremssattel 2 eine Torsionsfeder 40 ist, die mit ihrem einen Ende am feststehenden Teil 41 der Scheibenbremse befestigt ist, danach um das Führungsauge 5 des Bremssattels 2 gewickelt und schliesslich mit ihrem anderen Ende 43 am beweglichen Teil 44 befestigt ist. Das feststehende Teil 42 ist fest mit dem Bremsträger 1 verbunden und das bewegliche Teil 44 ist Teil des Bremssattels 2.

Das Moment der vorgespannten Torsionsfeder 40 ist so gross gewählt, dass es den Bremssattel 2 in seiner geöffneten Stellung hält. Bei entsprechender Dimensionierung der Torsionsfeder 40 kann der Bremssattel 2 allein durch die Federkraft in jeder Stellung gehalten werden.

Da die Torsionsfeder 40 ein Drehmoment gegen die Fallrichtung des Bremssattels 2 aufweist, wird dieser immer wieder in seine aufgeklappte Endlage zurückgedrückt, wenn er unbeabsichtigt angestossen wird, so dass ein Herunterfallen unmöglich ist.

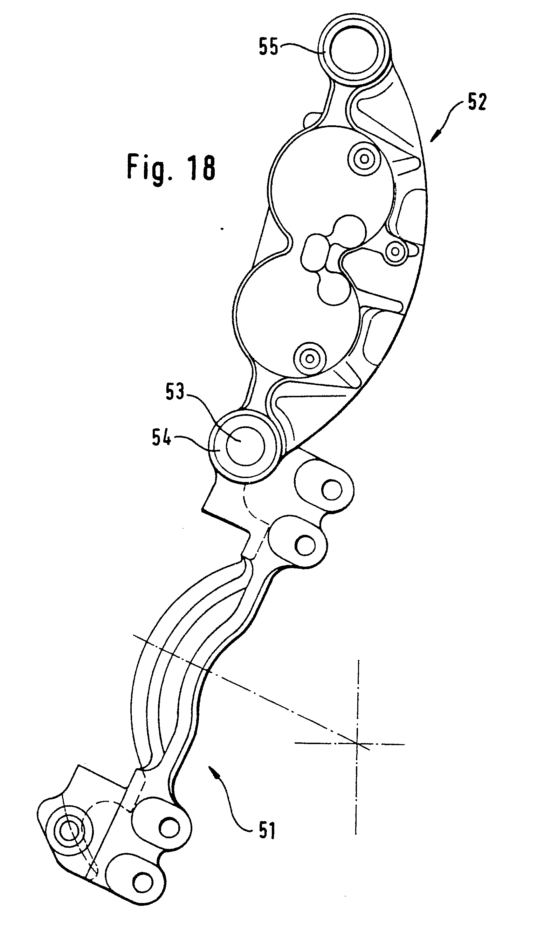

Im folgenden sind die in den Figuren 18 bis 28 dargestellten Ausführungsformen beschrieben. Die in diesen Figuren dargestellte Schwimmfaustsattel-Scheibenbremse besteht in allen Ausführungsformen aus einem Bremsträger 51, an dem ein Bremssattels 2 entlang zweier Führungsbolzen 53 axial verschiebbar gelagert sind.

Das Lagerelement 54 des Führungsbolzens 53 ist in einem Führungsauge 55 in dem Bremssattel 52 angeordnet. Im übrigen ist die Scheibenbremse wie üblich aufgebaut, d.h. der Bremssattel 52 umschliesst Bremsbeläge 56 und 57 und eine dazwischen angeordnete Bremsscheibe 58. Der innere Bremsbelag 56 wird durch in einem Betätigungszylinder 59 angeordnete Kolben gegen die Bremsscheibe 58 gedrückt. Gleichzeitig wirkt die Reaktionskraft gegen den Zylinderboden des Bremssattels 52 und verschiebt diesen auf den beiden Führungsbolzen 53 zur Fahrzeugmitte hin, wodurch der gegenüberliegende Bremsbelag 57 ebenfalls an die Bremsscheibe 58 gepresst wird.

Um eine Inspektion der Scheibenbremse vornehmen zu können, insbesondere die Bremsbeläge auswechseln zu können, muss der Bremssattel 52 um den als Schwenkachse dienenden Führungsbolzen 3 hochgeklappt werden. Nach Überschreiten eines Totpunktes bleibt der Bremssattel 2 von selbst auf dem unter einem Winkel von 30° aufgehängten Bremsträger 1 stehen. Diese Stellung zeigt die Fig. 1.

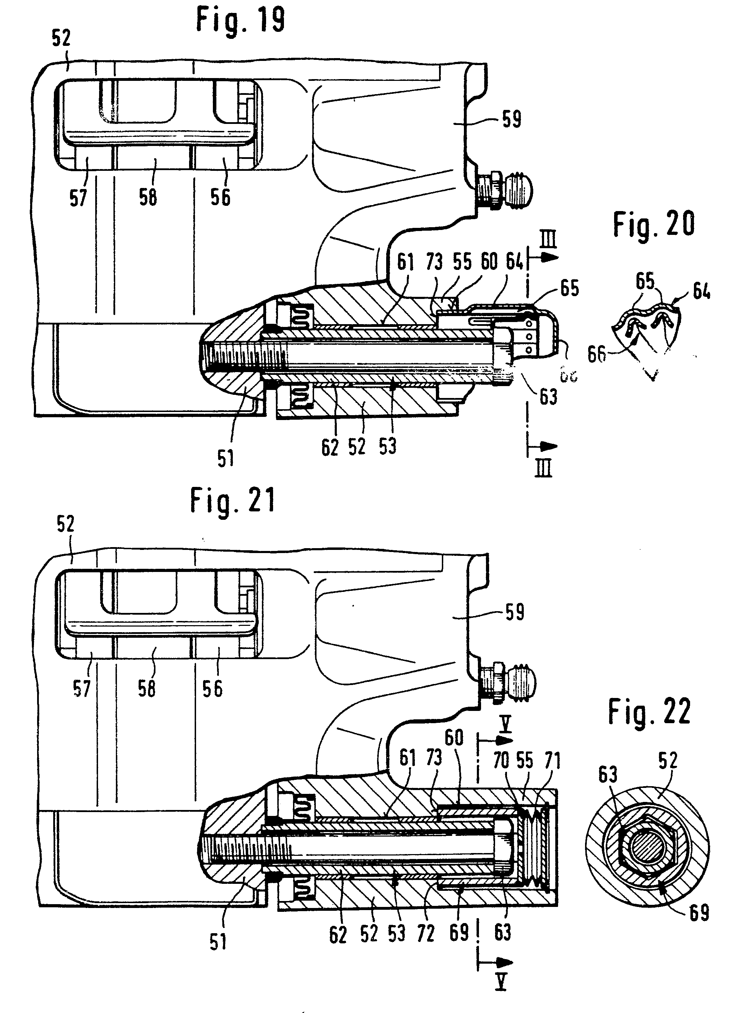

Auch wenn der Bremssattel 2 recht schwer ist und damit durch sein Eigengewicht in der geöffneten Stellung eine relativ stabile Lage aufweist, so kann doch nicht ausgeschlossen werden, dass bei einem unbeabsichtigten Anstossen des Bremssattels dieser runterfällt und einen an der Scheibenbremse arbeitenden Mechaniker erheblich verletzt. In den Fig. 19 bis 28 werden daher unterschiedliche Reib- und Ratschenlager dargestellt, die im Bereich des als Schwenkachse für den Bremssattel 52 dienenden Führungsbolzens 53 im Führungsauge 55 des Bremssattels 52 angeordnet sind.

Bei allen Ausführungsformen ist gewährleistet, dass der Bremssattel 52 in seiner axialen Richtung frei verschiebbar ist und keine einseitige Kraft an ihm angreift. Dieses würde zu einem Schleifen der Bremse führen.

Die Reib- und Ratschenlager sind in einer Bohrung 60 angeordnet, die im Führungsauge 55 des Bremssattels ausgebildet ist und einen grösseren Durchmesser als eine Führungsbohrung 61 hat, in der der Führungsbolzen 53 frei bewegbar geführt ist.

Der Führungsbolzen 53 besteht aus einer Hülse 62, die mit ihrem einen Ende an dem Bremsträger 51 befestigt ist und an dem anderen Ende eine Schraube 63 mit Aussensechskant trägt.

In der ersten Ausführungsform der Fig. 19 und 20 ist in die Bohrung 60 eine Büchse 64 eingepresst, deren Durchmesser grösser als der Durchmesser der Bohrung 60 ist und die längsverlaufende Sicken 65 aufweist. Als Gegenstück zu der Büchse 64 ist an der Schraube 63 ein geschlitzter Federtopf 66 befestigt, der längsverlaufende Erhebungen 67 aufweist, die den Sicken 65 in der Büchse 64 entsprechen und in diese eingreifen, was in Fig. 20 deutlich zu erkennen ist.

Die freie Verschiebbarkeit des Bremssattels 52 in axialer Richtung ist gewährleistet, da die Erhebungen 67 parallel zu den Sicken 65 verlaufen. Bei einem Verdrehen des Bremssattels 52 um seine Schwenkachse verursachen diese Sicken 65 und Erhebungen 67 eine Ratschenwirkung, dessen Moment dem Rückfallmoment des Sattels entgegenwirkt. Um das Führungsauge 55 des Bremssattels 52 vor Verschmutzung zu schützen, ist die Büchse 64 so ausgebildet, dass sie das Führungsauge 55 völlig abschliesst und somit gleichzeitig eine Schutzkappe darstellt, was mit dem Bezugszeichen 68 veranschaulicht ist.

In den nachfolgenden Ausführungsformen ist in die Bohrung 60 in dem Bremssattel 52 jeweils eine Büchse 69 eingesetzt, die einen Innensechskant aufweist, der dem Aussensechskant der Schraube 63 entspricht, so dass einerseits die Schraube 63 in axialer Richtung frei beweglich ist und andererseits die in Drehrichtung des Bremssattels 52 von der Schraube 63 festgehaltene Büchse 69 bei einer Drehung des Bremssattels 52 ein Reibungsmoment erzeugt.

In der Ausführungsform der Fig. 21 und 22 entspricht die Wandstärke der Büchse 69 etwa der die Bohrung 60 bildenden Ausnehmung in dem Führungsauge 55 des Bremssattels 52. Die Büchse 69 wird über eine Scheibe 70 von einer Tellerfeder 71 mit ihrer Stirnfläche 72 gegen die Stirnwand 73 der Bohrung 60 gedrückt. Bei einem Verdrehen des Bremssattels 52 erzeugen die aneinander anliegende Stirnfläche 72 der Büchse 69 und Stirnwand 73 der Bohrung 60 eine Reibung. Die Grösse der Reibung wird dabei durch die Tellerfeder 71 bestimmt.

Bei den nachfolgend beschriebenen Ausführungsformen sind die Büchsen 69 jeweils Federhülsen, deren Aussendurchmesser grösser als der Innendurchmesser der Bohrung 60 im Bremssattel 52 sind und die unter Verspannung in die Bohrung 60 eingesetzt sind.

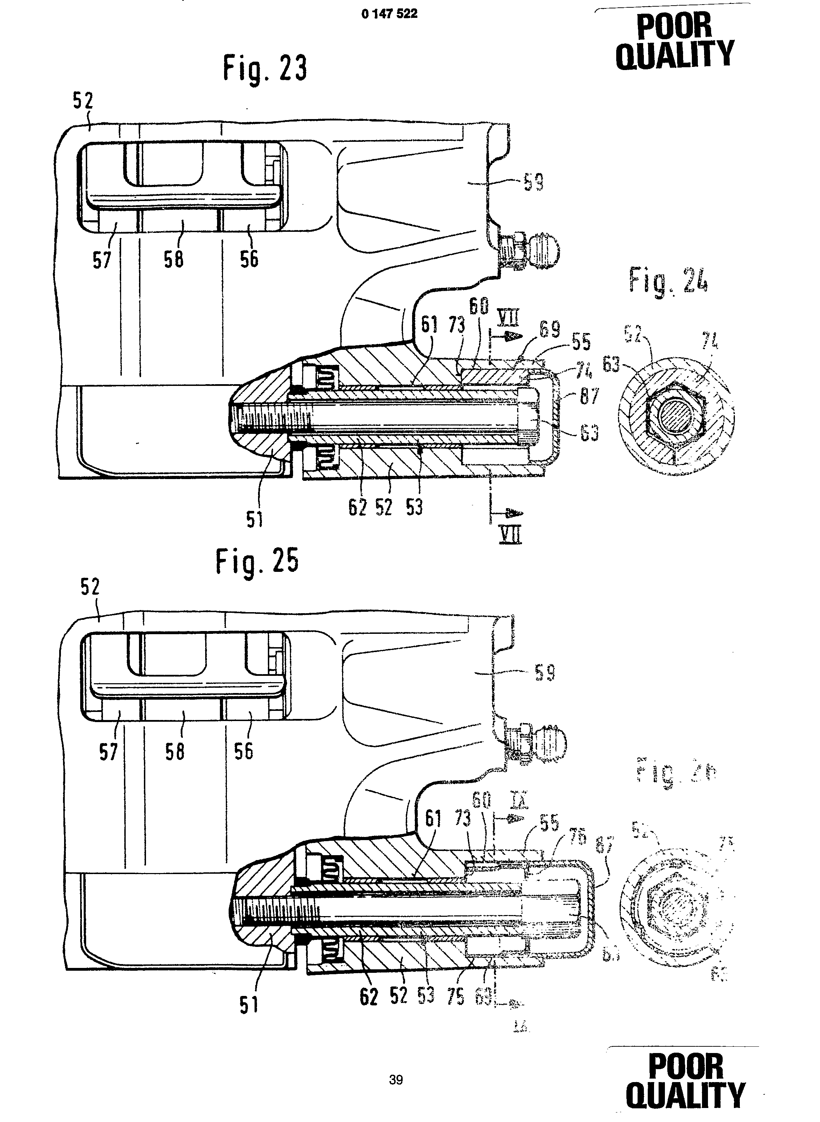

In der Ausführungsform der Fig. 23 und 24 ist die Büchse eine geschlitzte, in sich verschlossene Federhülse 74. Da ihr Aussendurchmesser grösser als der Innendurchmesser der Bohrung 60 im beweglichen Teil des Bremssattels 52 ist, verursachte sie eine Federkraft nach aussen, die bei einem Verdrehen des Bremssattels 52 überwunden werden muss.

Eine noch einfachere Ausführungsform zeigen die Fig. 25 und 26, bei der die Federhülse ein Blechteil 75 mit einer nach innen gerichteten Abkantung 76 ist. An ihrem freien Ende weist die Abkantung 76 einen Innensechskant auf, der dem Aussensechskant der Schraube 63 entspricht. Während der axialen Bewegung des Führungsbolzens 53 läuft die Abkantung 76 über die gesamte Länge des Schraubenkopfes.

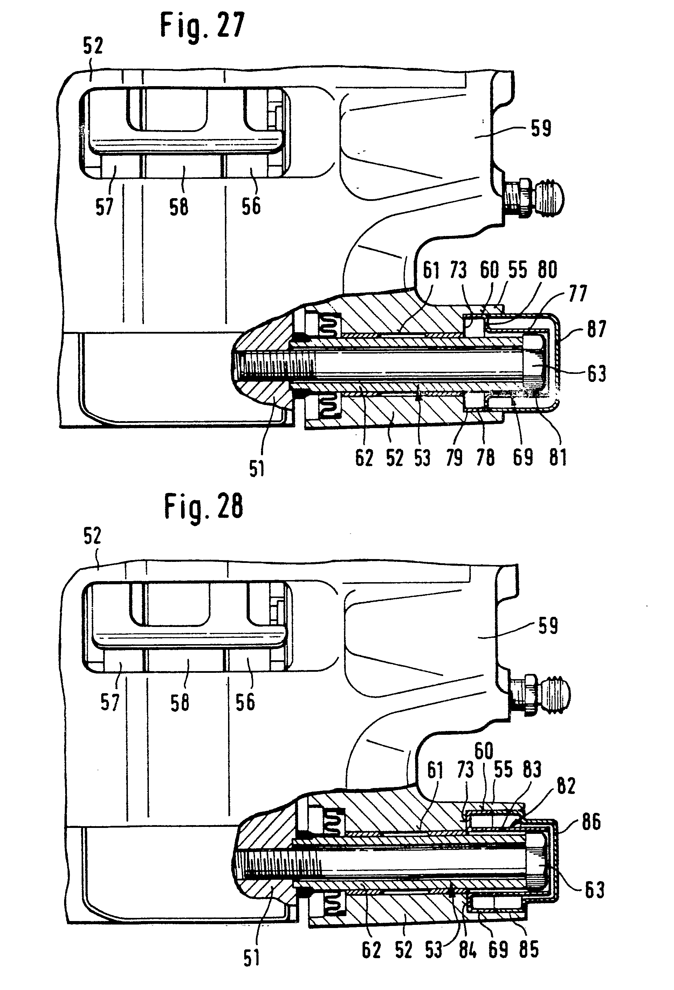

Bei der Ausführungsform der Fig. 27 ist die Federhülse 77 gestuft ausgeführt, wobei der an der Stirnwand 73 der Bohrung 60 gelegene Abschnitt 78 der Federhülse 77 an der Innenwand 79 der Bohrung 60 unter Vorspannung anliegt. An diesen Abschnitt 78 schliesst sich eine Abstufung 80 an, die in einen parallel zum ersten Abschnitt 78 verlaufenden zweiten Abschnitt 81 mit kleinerem Durchmesser übergeht, der ebenfalls einen Innensechskant aufweist, der dem Aussensechskant der Schraube 63 entspricht und mit diesem in Eingriff tritt. Der Reibmoment wird von der Umfangsfläche des ersten Abschnittes 78 erzeugt. Wegen des sich in Längsrichtung erstreckenden zweiten Abschnittes 81 braucht nur eine Schraube mit relativ kleinem Kopf verwendet werden.

Die in Fig. 28 dargestellte Ausführungsform zeigt nun eine Federhülse 82, die so ausgebildet ist, dass ein einen Innensechskant aufweisender Abschnitt 83 sich über den gesamten Bewegungsweg der Schraube 63 bis hin zur Stirnwand 73 der Bohrung 60 erstreckt. Dort schliesst sich an den Abschnitt 83 ein senkrechter Abschnitt 84 an, der in einen parallel zum ersten Abschnitt 83 verlaufenden dritten Abschnitt 85 übergeht, dessen Aussendurchmesser grösser als der Innendurchmesser der Bohrung 60 ist. Bei dieser Ausführungsform wird die Schraube 63 bis zur Stirnwand 73 der Bohrung 60 von dem Innensechskant der Federhülse 82 geführt. Die Reibung erfolgt wiederum an der Aussenseite der unter Vorspannung eingesetzten Federhülse 82. Die Reibung an der Stirnwand 73 kann als nicht vorhanden angesehen werden, dass keine Vorspannung in dieser Richtung erzeugt ist.

Um die Federhülse 82 allerdings in ihrer Lage zu halten, ist eine Schutzkappe 96 vorgesehen, die wesentlich den Schutzkappen 27 entspricht, die in den Ausführungsformen der Fig. 23, 25 und 27 verwendet sind, die sich untereinander nur durch ihre Länge unterscheiden. Sowohl die Schutzkappe 86, als auch die Schutzkappen 87 sind einfache Blechteile, die unter Vorspannung in die Bohrung 60 in den Bremssattel 52 eingepresst sind.

Bezugszeichenliste
1 Bremsträger
2 Bremssattel
3 Führungsbolzen
4 Lagerelement
5 Führungsauge
6 Bremsbelag
7 Bremsbelag
8 Bremsscheibe
9 Betätigungszylinder
10 Bohrung
11 Absicherungswerkzeug
12 Stift (Kerbnagel)
13 erster Anschlag (Gussnase)
14 erster Anschlag (Anschlagleiste)
15 Stift
16 zweiter Anschlag (Anschlagleiste)
17 Pfeil
18 Nase
19 freier Raum
20 erster Anschlag (Gussnocke)
21 zweiter Anschlag (Gussnocke)
22 Stift
23 zweiter Anschlag (Leiste am Bremsträger)
24 erster Anschlag (Leiste am Bremssattel)
25 Nase
26 Stift
27 Nocken
28 Nockenfeder
29 Nocken
30 Federelement

31 Stift
32 Gummiteil
33 selbstfedernder Stift
34 feststehendes Teil
35 Nocken
36 Bohrung
37 Stift
38 Feder
39 Auflaufschräge
40 Torsionsfeder
41 Ende von 40
42 feststehendes Teil
43 Ende von 40
44 bewegliches Teil

51 Bremsträger
52 Bremssattel
53 Führungsbolzen
54 Lagerelement
55 Führungsauge
56 Bremsbelag
57 Bremsbelag
58 Bremsscheibe
59 Betätigungszylinder
60 Bohrung
61 Führungsbohrung
62 Hülse
63 Schraube
64 Büchse
65 Sicken
66 Federtopf
67 Erhebungen
68 Schutzkappe
69 Büchse
70 Scheibe
71 Tellerfeder
72 Stirnfläche von 19
73 Stirnwand von 10
74 geschlossene Federhülse
75 Blechteil
76 Abkantung
77 Federhülse
78 erster Abschnitt
79 Innenwand
80 Abstufung
81 zweiter Abschnitt
82 Federhülse
83 Abschnitt mit Innenkante
84 senkrechter Abschnitt
85 dritter Abschnitt
86 Schutzkappe
87 Schutzkappe

**Patentansprüche**

1. Schwimmfaustsattel-Scheibenbremse, insbesondere für Kraftfahrzeuge, mit einem fest angeordneten Bremsträger (1), mit dem ein Bremssattel (2) über wenigstens einen Führungsbolzen (3) axial verschiebbar verbunden ist, wobei der Führungsbolzen (3) als Schwenkachse für den Bremssattel (2) dient und der Bremssattel (2) nach einem Herausschwenken durch eine Halterung (13, 14, 20, 24, 27, 29, 37) im Bereich eines Führungsauges (5) des Bremssattels (2) gegen ein unbeabsichtigtes Herunterfallen gesichert ist, dadurch gekennzeichnet, dass die Halterung (13, 14, 20, 24, 27, 29, 37) ein am Bremssattel (2) vorgesehener erster Anschlag (13, 14, 20, 24, 27, 29, 37) ist.

2. Schwimmfaustsattel-Scheibenbremse, insbesondere für Kraftfahrzeuge, mit einem fest angeordneten Bremsträger (1), mit dem ein Bremssattel (2) über wenigstens einen Führungsbolzen (3) axial verschiebbar verbunden ist, wobei der Führungsbolzen (3) als Schwenkachse für den Bremssattel (2) dient und der Bremssattel (2) nach einem Herausschwenken durch eine Halterung (13, 14, 20, 24, 27, 29, 37) im Bereich eines Führungsauges (5) des Bremssattels (2) gegen ein unbeabsichtigtes Herunterfallen gesichert ist, dadurch gekennzeichnet, dass die Halterung (13, 14, 20, 24, 27, 29, 37) aus einer Zahnscheibe besteht, in die ein Sicherungsblech eingreift.

3. Schwimmfaustsattel-Scheibenbremse, insbesondere für Kraftfahrzeuge, mit einem fest angeordneten Bremsträger (1), mit dem ein Bremssattel (2) über wenigstens einen Führungsbolzen (3) axial verschiebbar verbunden ist, wobei der Führungsbolzen (3) als Schwenkachse für den Bremssattel (2) dient und der Bremssattel (2) nach einem Herausschwenken durch eine Halterung (40) im Bereich eines Führungsauges (5) des Bremssattels (2) gegen ein unbeabsichtigtes Herunterfallen gesichert ist, dadurch gekennzeichnet, dass die Halterung (40) eine Torsionsfeder (40) ist, die mit ihrem einen Ende (41) am feststehenden Teil (42) der Scheibenbremse befestigt ist, danach um das Führungsauge (5) des Bremssattels (2) gewickelt und schliesslich mit ihrem anderen Ende (43) am drehenden Teil der Scheibenbremse befestigt ist.

4. Schwimmfaustsattel-Scheibenbremse nach Anspruch 1, dadurch gekennzeichnet, dass der erste Anschlag (13, 14, 20, 24, 27, 29, 37) eine im Bereich des Führungsauges (5) des Bremssattels (2) ausgebildete Erhöhung (13, 14, 20) ist, die an einem am Bremsträger (1) angeordneten Stift (12, 15, 22) zur Anlage kommt.

5. Schwimmfaustsattel-Scheibenbremse nach Anspruch 4, dadurch gekennzeichnet, dass die Erhöhung (13, 14, 20) eine einstückig mit dem Bremssattel (2) ausgebildete Gussnase (13) ist.

6. Schwimmfaustsattel-Scheibenbremse nach Anspruch 4, dadurch gekennzeichnet, dass der Stift (12) ein Kerbnagel (12) ist.

7. Schwimmfaustsattel-Scheibenbremse nach einem der Ansprüche 1 bis 6, dadurch gekennzeichnet, dass in Schwenkrichtung des Bremssattels (2) nach dem ersten Anschlag (13, 14, 20) vor der Totpunktlage des Bremssattels (2) ein zweiter Anschlag (16, 21) vorgesehen ist.

8. Schwimmfaustsattel-Scheibenbremse nach Anspruch 7 in Verbindung mit Anspruch 4, dadurch gekennzeichnet, dass der erste und zweite Anschlag zwei auf dem Führungsauge (5) des Bremssattels (2) angeordnete Gussleisten (14, 16) sind.

9. Schwimmfaustsattel-Scheibenbremse nach Anspruch 7 oder 8, dadurch gekennzeichnet, dass die beiden Anschläge (13, 14, 20; 16, 21) so auf dem Führungsauge (5) des Bremssattels (2) angeordnet sind, dass bei einem Verschwenken des Bremssattels (2) um einen Drehwinkel, der so gross ist, dass die Bremsbeläge (6, 7) noch nicht entnommen werden können, der erste Anschlag (13, 14, 20) an dem an dem Bremsträger (1) angeordneten Stift (12, 15, 22) zur Anlage kommt, dass nach einem Herausziehen des Bremssattels (2) entlang des Führungsbolzens (3) der Bremssattel (2) an dem gegenüber dem zweiten Anschlag (16, 20) an dieser Seite kürzeren ersten Anschlag (14, 20) vorbei bis zu dem zweiten Anschlag (16, 21) weiter verschwenkbar ist und dass der auf dem Führungsbolzen (3) zurückgeschobene Bremssattel (2) bei einer Abwärtsbewegung an der anderen Seite des ersten Anschlages (14, 20) zur Anlage kommt.

10. Schwimmfaustsattel-Scheibenbremse nach Anspruch 9, dadurch gekennzeichnet, dass der als Gussleiste ausgebildete erste Anschlag (14) gegenüber dem zweiten Anschlag (16) schräg auf dem Führungsauge (5) des Bremssattels (2) angeordnet ist.

11. Schwimmfaustsattel-Scheibenbremse nach Anspruch 10, dadurch gekennzeichnet, dass an dem Stift (15) eine abgebogene Nase (18) ausgebildet ist.

12. Schwimmfaustsattel-Scheibenbremse nach einem der Ansprüche 7 bis 9, dadurch gekennzeichnet, dass die als Gussleisten ausgebildeten ersten (14) und zweiten (16) Anschläge parallel zueinander angeordnet sind.

13. Schwimmfaustsattel-Scheibenbremse nach Anspruch 9, dadurch gekennzeichnet, dass die beiden Anschläge Gussnocken (20, 21) sind, die mit dem Führungsauge (5) des Bremssattels (2) einstückig ausgebildet sind.

14. Schwimmfaustsattel-Scheibenbremse nach Anspruch 1, dadurch gekennzeichnet, dass erste Anschlag (24) eine am Führungsauge (5) des Bremssattels (2) angeordnete Leiste (24) und ein zweiter Anschlag eine am Bremsträger (1) vorgesehene Leiste (23) ist, an die beim Verschwenken des Bremssattels (2) die am Führungsauge (5) des Bremssattels (2) angeordnete Leiste (24) zur Anlage kommt, dass die Leiste (23) so lang ist, dass bei einem Verschieben des Bremssattels (2) auf dem Führungsbolzen (3) über die Länge der Leiste (23) hinaus der Bremssattel (2) an der Leiste (23) vorbei weiter verschwenkbar ist, dass der Bremssattel (2) nach dieser Schwenkbewegung auf dem Führungsbolzen (3) zurückschiebbar ist und bei einer Abwärtsbewegung an der anderen Seite des zweiten Anschlages (23) zur Anlage kommt.

15. Schwimmfaustsattel-Scheibenbremse nach Anspruch 14, dadurch gekennzeichnet, dass an mindestens einem der Enden der am Bremssattel (2) angebrachten Leiste (24) eine Nase (25) ausgebildet ist.

16. Schwimmfaustsattel-Scheibenbremse nach Anspruch 2 oder 9, dadurch gekennzeichnet, dass die Anschläge (16, 21, 23) so angeordnet sind, dass die hieran anschlagenden Bauteile zum Anschlag kommen, bevor der Bremssattel (2) über seinen Totpunkt gedreht ist.

17. Schwimmfaustsattel-Scheibenbremse nach Anspruch 4, dadurch gekennzeichnet, dass die Erhöhung (13, 14, 20, 27) ein Nocken (27) einer um das Führungsauge (5) des Bremssattels (2) gelegten Nockenfeder (28) ist.

18. Schwimmfaustsattel-Scheibenbremse nach Anspruch 17, dadurch gekennzeichnet, dass der Stift (26) so im Bremsträger (1) angeordnet ist, dass der Bremssattel (2) über seinen Totpunkt geschwenkt werden muss, damit der Stift (26) mit dem Nocken (27) der Nockenfeder (28) in Eingriff steht.

19. Schwimmfaustsattel-Scheibenbremse nach Anspruch 17, dadurch gekennzeichnet, dass die Nockenfeder (28) eine Drahtfeder ist.

20. Schwimmfaustsattel-Scheibenbremse nach Anspruch 17, dadurch gekennzeichnet, dass die Nockenfeder (28) eine Blattfeder ist.

21. Schwimmfaustsattel-Scheibenbremse nach Anspruch 1, dadurch gekennzeichnet, dass der erste Anschlag (13, 14, 20, 24, 27, 29, 37) ein am Führungsauge (5) des Bremssattels (2) angeordneter Nocken (29) ist, der mit einem am Bremsträger (1) angeordneten Federelement (30) in Eingriff gelangt.

22. Schwimmfaustsattel-Scheibenbremse nach Anspruch 21, dadurch gekennzeichnet, dass das Federelement (30) ein im Bremsträger (1) gummigelagerter Stift (31) ist.

23. Schwimmfaustsattel-Scheibenbremse nach Anspruch 21, dadurch gekennzeichnet, dass das Federelement (30) ein im Bremsträger (1) angeordneter selbstfedernder Stift (33) ist.

24. Schwimmfaustsattel-Scheibenbremse nach Anspruch 1, dadurch gekennzeichnet, dass der erste Anschlag (13, 14, 20, 24, 27, 29, 37) ein innerhalb des Führungsauges (5) des Bremssattels (2) am feststehenden Teil (34) der Scheibenbremse angeordneter Nocken (35) ist, an dem ein durch eine Bohrung (36) im Bremssattel (2) geführter federbelasteter Stift (37) angreift.

25. Schwimmfaustsattel-Scheibenbremse, insbesondere für Kraftfahrzeuge, mit einem fest angeordneten Bremsträger (51), mit dem ein Bremssattel (52) über wenigstens einen Führungsbolzen (53) axial verschiebbar verbunden ist, wobei der Führungsbolzen (53) als Schwenkachse für den Bremssattel (52) dient und der Bremssattel (52) gegen ein unbeabsichtigtes Herunterfallen gesichert ist, dadurch gekennzeichnet, dass der Bremssattel (56) im Bereich der Schwenkachse ein zusätzliches Reib- oder Ratschenlager aufweist.

26. Schwimmfaustsattel-Scheibenbremse nach Anspruch 25, wobei der als Schwenkachse dienende Führungsbolzen (53) eine Hülse (62) ist, die mit ihrem einen Ende an dem Bremsträger (51) befestigt ist und am anderen Ende eine Schraube (63) trägt, dadurch gekennzeichnet, dass in einem den Führungsbolzen (53) aufnehmenden Führungsauge (55) des Bremssattels (52) eine Bohrung (60) ausgebildet ist, deren Durchmesser grösser als der Durchmesser der Führungsbohrung (61) im Bremssattel (52) ist, dass in die Bohrung (60) eine Büchse (64) eingepresst ist, deren Durchmesser grösser als der Durchmesser der Bohrung (60) ist und die längsverlaufende Sicken (65) aufweist, und dass an der Schraube (63) ein Federtopf (66) befestigt ist, der längsverlaufende Erhebungen (67) aufweist, die den Sicken (65) in der Büchse (64) entsprechen und in diese eingreifen.

27. Schwimmfaustsattel-Scheibenbremse nach Anspruch 26, dadurch gekennzeichnet, dass die Büchse (64) das Führungsauge (55) des Bremssattels (52) abschliesst und somit eine Schutzkappe (68) bildet.

28. Schwimmfaustsattel-Scheibenbremse nach Anspruch 25, wobei der als Schwenkachse dienende Führungsbolzen (53) eine Hülse (62) ist, die mit ihrem einen Ende an dem Bremsträger (51) befestigt ist und am anderen Ende eine Schraube (63) mit Aussensechskant trägt, dadurch gekennzeichnet, dass in einem den Führungsbolzen (53) aufnehmenden Führungsauge (55) des Bremssattels (52) eine Bohrung (60) ausgebildet ist, deren Durchmesser grösser als der Durchmesser der Führungsbohrung (61) im Bremssattel (52) ist, dass in diese Bohrung (60) eine Büchse (69) mit Innensechskant eingesetzt ist, der dem Aussensechskant der Schraube (63) entspricht, so dass die Schraube (63) in axialer Richtung frei beweglich ist, und dass die in Drehrichtung des Bremssattels (52) von der Schraube (63) festgehaltene Büchse (69) bei einer Drehung des Bremssattels (52) ein Reibungsmoment erzeugt.

29. Schwimmfaustsattel-Scheibenbremse nach Anspruch 28, dadurch gekennzeichnet, dass die Wandstärke der Büchse (69) etwa der die Bohrung (60) bildenden Ausnehmung in der Führungsbohrung (61) des Bremssattels (52) entspricht, und dass die Büchse (69) von einer Feder (71) mit ihrer Stirnfläche (72) gegen die Stirnwand (73) der Bohrung (60) gedrückt wird, wo sie bei Drehung des Bremssattels (52) eine Reibung erzeugt.

30. Schwimmfaustsattel-Scheibenbremse nach Anspruch 29, dadurch gekennzeichnet, dass die Feder eine Tellerfeder (71) ist.

31. Schwimmfaustsattel-Scheibenbremse nach Anspruch 28, dadurch gekennzeichnet, dass die Büchse (69) eine Federhülse (74, 75, 77, 82) ist, deren Aussendurchmesser grösser als der Innendurchmesser der Bohrung (60) ist, und dass die Federhülse (74, 75, 77, 82) unter Vorspannung in die Bohrung (60) eingesetzt ist.

32. Schwimmfaustsattel-Scheibenbremse nach Anspruch 31, dadurch gekennzeichnet, dass die Federhülse (74) eine geschlitzte, geschlossene Hülse ist.

33. Schwimmfaustsattel-Scheibenbremse nach Anspruch 31, dadurch gekennzeichnet, dass die Federhülse ein Blechteil (75) mit einer nach innen gerichteten Abkantung (76) ist, dass das Blechteil (75) an dem freien Ende der Abkantung (76) einen Innensechskant aufweist, der dem Aussensechskant der Schraube (63) entspricht, und dass die Abkantung (76) über die gesamte Länge des Schraubenkopfes an diesem entlangläuft.

34. Schwimmfaustsattel-Scheibenbremse nach Anspruch 31, dadurch gekennzeichnet, dass die Federhülse (77) gestuft ausgeführt ist, dass der an der Stirnwand (73) der Bohrung (60) gelegene Abschnitt (78) der Federhülse (77) an der Innenwand (79) der Bohrung (60) unter Vorspannung anliegt und dass sich an diesem ersten Abschnitt (78) mit grossem Durchmesser nach einer Abstufung (80) ein zum ersten Abschnitt (78) parallel verlaufender zweiter Abschnitt (81) mit kleinerem Durchmesser mit Innensechskant anschliesst, der mit dem Aussensechskant der Schraube (63) in Eingriff tritt.

35. Schwimmfaustsattel-Scheibenbremse nach Anspruch 31, dadurch gekennzeichnet, dass die Federhülse (82) so ausgebildet ist, dass ein einen Innensechskant aufweisender Abschnitt (83) der Federhülse (82) sich über den gesamten Bewegungsweg der Schraube (63) bis zur Stirnwand (73) der Bohrung (60) erstreckt, dass sich hieran ein senkrechter Abschnitt (84) anschliesst, der in einen parallel zum ersten Abschnitt (83) verlaufenden dritten Abschnitt (85) übergeht, dessen Aussendurchmesser grösser als der Innendurchmesser der Bohrung (60) geht.

**Claims**

1. A fist-type floating-caliper disc brake, in particular for automotive vehicles, comprising a rigidly arranged brake carrier (1) to which a brake caliper (2) is axially slidably coupled through at least one guide bolt (3), the said guide bolt (3) serving as a tilting axis for the brake caliper (2), and the brake caliper (2), after having swung out, being secured against falling down inadvertently by means of a retraining arrangement (13, 14, 20, 24, 27, 29, 37) in the area of a guide lug (5) of the brake caliper (2), characterized in that the retaining arrangement (13, 14, 20, 24, 27, 29, 37) is a first stop (13, 14, 20, 24, 27, 29, 37) provided on the brake caliper (2).

2. A fist-type floating-caliper disc brake, in particular for automotive vehicles, comprising a rigidly arranged brake carrier (1) to which a brake caliper (2) is axially slidably coupled through at least one guide bolt (3), the said guide bolt (3) serving as a tilting axis for the brake caliper (2), and the brake caliper (2), after having swung out, being secured against falling down inadvertently by means of a retaining arrangement (13, 14, 20, 24, 27, 29, 37) in the are of a guide lug (5) of the brake caliper (2), characterized in that the retaining arrangement (13, 14, 20, 24, 27, 29, 37) is a toothed disc into which a locking plate is engaging.

3. A fist-type floating-caliper disc brake, in particular for automotive vehicles, comprising a rigidly arranged brake carrier (1) to which a brake caliper (2) is axially slidably coupled through at least one guide bolt (3), the said guide bolt (3) serving as a tilting axis for the brake caliper (2), and the brake caliper (2), after having swung out, being secured against falling down inadvertently by means of a retaining arrangement (40) in the area of a guide lug (5) of the brake caliper (2), characterized in that the retaining arrangement (40) is a torsion spring (40) which with its one end (41) is secured to the stationary part (42) of the disc brake, subsequently is wound around the guide lug (5) of the brake caliper (2) and finally with its other end (43) is secured to the rotating part of the disc brake.

4. A fist-type floating-caliper disc brake as claimed in claim 1, characterized in that the first stop (13, 14, 20, 24, 27, 29, 37) is a projection (13, 14, 20, 27) designed in the area of the guide lug (5) of the brake caliper (2), which projection moves into abutment on a pin (12, 15, 22) arranged at the brake carrier (1).

5. A fist-type floating-caliper disc brake as claimed in claim 4, characterized in that the projection (13, 14, 20) is a cast nose (13) formed integrally with the brake caliper (2).

6. A fist-type floating-caliper disc brake as claimed in claim 4, characterized in that the pin (12) is a notched nail (12).

7. A fist-type floating-caliper disc brake as claimed in any one of the claims 1 through 6, characterized in that a second stop (16, 21) is provided in the tilting direction of the brake caliper (2) after the first stop (13, 14, 20) before the dead-center position of the brake caliper (2).

8. A fist-type floating-caliper disc brake as claimed in claim 7 in conjunction with claim 4, characterized in that the first and the second stop are two cast bars (14, 16) arranged on the guide lug (5) of the brake caliper (2).

9. A fist-type floating-caliper disc brake as claimed in claim 7 or 8, characterized in that the two stops (13, 14, 20; 16, 21) are arranged on the guide lug (5) of the brake caliper (2) such that, on tilting of the brake caliper (2) about an angle of rotation so great that the brake pads (6, 7) are not yet removable, the first stop (13, 14, 20) moves into abutment on the pin (12, 15, 22) arranged at the brake carrier (1), in that, after the brake caliper (2) has been drawn out along the guide bolt (3), the brake caliper (2) is tiltable further past the first stop (14, 20), which is on this side shorter compared to the second stop (16, 21), until up to the second stop (16, 21), and in that the brake caliper (2) slid back on the guide bolt (3) will come to bear against the other side of the first stop (14, 20) when moving downwardly.

10. A fist-type floating-caliper disc brake as claimed in claim 9, characterized in that the first stop (14) designed as a cast bar is arranged on the guide lug (5) of the brake caliper (2) transversely in relation to the second stop (16).

11. A fist-type floating-caliper disc brake as claimed in claim 10, characterized in that a bent nose (18) is designed on the pin (15).

12. A fist-type floating-caliper disc brake as claimed in any one of the claims 7 to 9, characterized in that the first (14) and second (16) stops designed as cast bars are located in parallel to one another.

13. A fist-type floating-caliper disc brake as claimed in claim 9, characterized in that the two stops are cast cams (20, 21) which are designed integrally with the guide lug (5) of the brake caliper (2).

14. A fist-type floating-caliper disc brake as claimed in claim 1, characterized in that the first stop (24) is a bar (24) provided on the guide lug (5) of the brake caliper (2) and a second stop is a bar (23) provided on the brake carrier (1), abutting on which will be the bar (24) arranged on the guide lug (5) of the brake caliper (2) on tilting of the brake caliper (2), in that the bar (23) is so long that, upon shift of the brake caliper (2) on the guide bolt (3) beyond the length of the bar (23), the brake caliper (2) can be tilted further past the bar (23), in that the brake caliper (2) can be slid back on the guide bolt (3) after this tilting movement and will move into abutment on the other side of the second stop (23) when moving downwardly.

15. A fist-type floating-caliper disc brake as claimed in claim 14, characterized in that a nose (25) is designed on at least one of the ends of the bar (24) fitted to the brake caliper (2).

16. A fist-type floating-caliper disc brake as claimed in claim 2 or 9, characterized in that the stops (16, 21, 23) are located such that the components abutting thereon will move into abutment prior to the brake caliper (2) having turned beyond its dead center.

17. A fist-type floating-caliper disc brake as claimed in claim 4, characterized in that the projection (13, 14, 20, 27) is a cam (27) of a cam spring (28) wrapped around the guide lug (5) of the brake caliper (2).

18. A fist-type floating-caliper disc brake as claimed in claim 17, characterized in that the pin (26) is arranged such in the brake carrier (1) that the brake caliper (2) must be swivelled beyond its dead center to cause the pin (26) to move into engagement with the cam (27) of the cam spring (28).

19. A fist-type floating-caliper disc brake as claimed in claim 17, characterized in that the cam spring (28) is a wire spring.

20. A fist-type floating-caliper disc brake as claimed in claim 17, characterized in that the cam spring (28) is a leaf spring.

21. A fist-type floating-caliper disc brake as claimed in claim 1, characterized in that the first stop (13, 14, 20, 24, 27, 29, 37) is a cam (29) arranged on the guide lug (5) of the brake caliper (2), which cam (29) gets into engagement with a spring element (30) located at the brake carrier (1).

22. A fist-type floating-caliper disc brake as claimed in claim 21, characterized in that the spring element (30) is a pin (31) supported in a rubber part in the brake carrier (1).

23. A fist-type floating-caliper disc brake as claimed in claim 21, characterized in that the spring element (30) is a resilient pin (33) arranged in the brake carrier (1).

24. A fist-type floating-caliper disc brake as claimed in claim 1, characterized in that the first stop (13, 14, 20, 24, 27, 29, 37) is a cam (35) which is arranged within the guide lug (5) of the brake caliper (2) on the stationary part (34) of the disc brake, at which cam a spring-loaded pin (37) engages that extends through a bore (36) in brake caliper (2).

25. A fist-type floating-caliper disc brake, in particular for automotive vehicles, comprising a rigidly arranged brake carrier (51) to which a brake caliper (52) is axially slidably coupled through at least one guide bolt (53), the said guide bolt (53) serving as a tilting axis for the brake caliper (52), and the brake caliper (52) being protected against inadvertently falling down, characterized in that the brake caliper (52) comprises an additional friction bearing or ratchet-type bearing in the area of its tilting axis.

26. A fist-type floating-caliper disc brake as claimed in claim 25, wherein the guide bolt (53) serving as a tilting axis is a sleeve (62) which is with its one end secured to the brake carrier (51), while carrying a screw (63) at its other end, characterized in that a bore (60) is formed in a guide lug (55) of the brake caliper (52) receiving the guide bolt (53), the said bore's diameter being larger than the diameter of the guide bore (61) in the brake caliper (52), in that a bushing (64) is pressed into the bore (60) whose diameter is larger than the diameter of the bore (60) and which comprises longitudinally extending depressions (65), and in that fitted to the screw (63) is a bowl-type spring retainer (66) which comprises longitudinally extending projections (67) which correspond to the depressions (65) in the bushing (64) and engage into these.

27. A fist-type floating-caliper disc brake as claimed in claim 26, characterized in that the bushing (64) closes the guide lug (55) of the brake caliper (52) and hence formes a protective cap (68).

28. A fist-type floating-caliper disc brake as claimed in claim 25, wherein the guide bolt (53) serving as a tilting axis is a sleeve (62) which with its one end is secured to the brake carrier (51), while carrying a screw (63) with hexagonal outer contour at its other end, characterized in that a bore (60) is designed in a guide lug (55) of the brake caliper (52) receiving the guide bolt (53), the said bore's diameter being larger than the diameter of the guide bore (61) in the brake caliper (52), in that inserted into said bore (60) is a bushing (69) with a hexagonal recess which corresponds to the hexagonal outer contour of the screw (63), thus enabling the screw (63) to move freely in an axial direction, and in that the bushing (69) that is held tight by the screw (63) in the direction of rotation of the brake caliper (52) generates a friction torque upon rotation of the brake caliper (52).

29. A fist-type floating-caliper disc brake as claimed in claim 28, characterized in that the wall thickness of the bushing (69) corresponds approximately to the recess forming the bore (60) in the guide bore (61) of the brake caliper (52), and in that said bushing (69) is urged by a spring (71) with its end surface (72) against the end wall (73) of the bore (60), where it generates friction on rotation of the brake caliper (52).

30. A fist-type floating-caliper disc brake as claimed in claim 29, characterized in that the spring is a cup spring (71).

31. A fist-type floating-caliper disc brake as claimed in claim 28, characterized in that the bushing (69) is a spring sleeve (74, 75, 77, 82) whose outer diameter is larger than the inner diameter of the bore (60), and in that the spring sleeve (74, 75, 77, 82) is inserted with preload into the bore (60).

32. A fist-type floating-caliper disc brake as claimed in claim 31, characterized in that the spring sleeve (74) is a slotted closed sleeve.

33. A fist-type floating-caliper disc brake as claimed in claim 31, characterized in that the spring sleeve is a sheet-metal component (75) with an inwardly directed angled portion (76), in that the sheet-metal component (75) contains at the free end of its angled portion (76) a hexagonal recess which corresponds to the hexagonal outer contour of the screw (63), and in that the said angled portion (76) extends alongside of the entire length of the screw head.

34. A fist-type floating-caliper disc brake as claimed in claim 31, characterized in that the spring sleeve (77) is of stepped design, in that the portion (78) of the spring sleeve (77) disposed at the end wall (73) of the bore (60) abuts with preload on the inner wall (79) of the bore (60), and in that this first portion (78) with large diameter is succeeded after a step (80) by a second portion (81) of smaller diameter which extends in parallel to the first portion (78) and comprises a hexagonal recess that moves into engagement with the hexagonal outer contour of the screw (63).

35. A fist-type floating-caliper disc brake as claimed in claim 31, characterized in that the spring sleeve (82) is of a design such that a portion (83) of the spring sleeve (82) containing a hexagonal recess extends over the entire course of motion of the screw (63) until up to the end wall (73) of the bore (60), that adjacent thereto is a vertical portion (84) that passes over into a third portion (85) which extends in parallel to said first portion (83) and whose outer diameter is larger than the inner diameter of the bore (60).

**Revendications**

1. Frein à disque à étrier flottant, en particulier pour des véhicules automobiles, comprenant un support de frein (1) monté fixe auquel un étrier de frein (2) est relié de manière axialement coulissante par l'intermédiaire d'au moins un boulon de guidage (3), le boulon de guidage (3) servant d'axe de pivotement pour l'étrier de frein (2) et l'étrier de frein (2) étant empêché de retomber accidentellement après un pivotement, au moyen d'un support (13, 14, 20, 24, 27, 29, 37) situé dans la zone d'un bossage (5) de l'étrier de frein (2), caractérisé en ce que le support (13, 14, 20, 24, 27, 29, 37) est une première butée (13, 14, 20, 24, 27, 29, 37) prévue sur l'étrier de frein (2).

2. Frein à disque à étrier flottant, en particulier pour des véhicules automobiles, comprenant un support de frein (1) monté fixe auquel un étrier de frein (2) est relié de manière axialement coulissante pour l'intermédiaire d'au moins un boulon de guidage (3), le boulon de guidage (3) servant d'axe de pivotement pour l'étrier de frein (2) et l'étrier de frein (2) étant empêché de retomber accidentellement après un pivotement, au moyen d'un support (13, 14, 20, 24, 27, 29, 37) situé dans la zone d'un bossage (5) de l'étrier de frein (2), caractérisé en ce que le support (13, 14, 20, 24, 27, 29, 37) est constitué d'un disque denté coopérant avec une tôle de blocage.

3. Frein à disque à étrier flottant, en particulier pour des véhicules automobiles, comprenant un support de frein (1) monté fixe auquel un étrier de frein (2) est relié de manière axialement coulissante par l'intermédiaire d'au moins un boulon de guidage (3), le boulon de guidage (3) servant d'axe de pivotement pour l'étrier de frein (2) et l'étrier de frein (2) étant empêché de retomber accidentellement après un pivotement, au moyen d'un support (40) situé dans la zone d'un bossage (5) de l'étrier de frein (2), caractérisé en ce que le support (40) est un ressort à torsion (40) dont l'une des extrémités (41) est fixée à la pièce fixe (42) du frein à disque, qui est ensuite enroulé autour du bossage (5) de l'étrier de frein (2) et, enfin, dont l'autre extrémité (43) est fixée à la pièce mobile du frein à disque.

4. Frein à disque à étrier flottant conforme à la revendication 1, caractérisé en ce que la première butée (13, 14, 20, 24, 27, 29, 37) est une bosse (13, 14, 20, 27) qui est disposée dans la zone du bossage (5) de l'étrier de frein (2) et qui vient au contact d'une broche (12, 15, 22) disposée sur le support de frein (1).

5. Frein à disque à étrier flottant conforme à la revendication 4, caractérisé en ce que la bosse (13, 14, 20) est un ergot moulé (13) formé d'une seule pièce avec l'étrier de frein (2).

6. Frein à disque à étrier flottant conforme à la revendication 4, caractérisé en ce que la broche (12) est une goupille à encoches (12).

7. Frein à disque à étrier flottant conforme à l'une quelconque des revendications 1 à 6, caractérisé en ce que, dans le sens de pivotement de l'étrier de frein (2), il est prévu une deuxième butée (16, 21) après la première butée (13, 14, 20) avant la position de point mort de l'étrier de frein (2).

8. Frein à disque à étrier flottant conforme à la revendication 7 et à la revendication 4, caractérisé en ce que les première et deuxième butées sont deux barrettes moulées (14, 16) disposées sur le bossage (5) de l'étrier de frein (2).

9. Frein à disque à étrier flottant conforme à la revendication 7 ou 8, caractérisé en ce que les deux butées (13, 14, 20; 16, 21) sont disposées sur le bossage (5) de l'étrier de frein (2), de façon qu'en cas de déplacement de l'étrier de frein (2) selon un angle de rotation assez grand pour que les garnitures de frein (6, 7) ne puissent pas encore être extraites, la première butée (13, 14, 20) soit appliquée contre la broche (12, 15, 22) disposée sur le support de frein (1), qu'après avoir sorti l'étrier de frein (2) le long du boulon de guidage (3), l'étrier de frein (2) puisse être encore déplacé au-delà de la première butée (14, 20), qui est plus courte de ce côté que la deuxième butée (16, 21), et amené jusqu'à cette dernière, et qu'en cas de recul, l'étrier de frein (2) repoussé sur le boulon de guidage (3) soit appliqué contre l'autre côté de la première butée (14, 20).

10. Frein à disque à étrier flottant conforme à la revendication 9, caractérisé en ce que la première butée (14) conçue sous la forme d'une barrette moulée est disposée en oblique, sur le bossage (5) de l'étrier de frein (2), par rapport à la deuxième butée (16).

11. Frein à disque à étrier flottant conforme à la revendication 10, caractérisé en ce que sur la broche (15) est prévu un talon courbe (18).

12. Frein à disque à étrier flottant conforme à l'une quelconque des revendications 7 à 9, caractérisé en ce que les première (14) et deuxième (16) butées conçues sous la forme de barrettes moulées sont disposées de manière parallèle l'une à l'autre.

13. Frein à disque à étrier flottant conforme à la revendication 9, caractérisé en ce que les deux butées sont des cames moulées (20, 21) qui sont réalisées d'une seule pièce avec le bossage (5) de l'étrier de frein (2).

14. Frein à disque à étrier flottant conforme à la revendication 1, caractérisé en ce qu'une première butée (24) est une barrette (24) disposée sur le bossage (5) de l'étrier de frein (2) et une deuxième butée est une barrette (23) qui est prévue sur le support de frein (1) et contre laquelle la barrette (24) disposée sur le bossage (5) de l'étrier de frein (2) est appliquée lors du pivotement de l'étrier de frein (2), en ce que la barrette (23) est assez longue pour que, si l'étrier de frein (2) coulisse sur le boulon de guidage (3) au-delà de la longueur de la barrette (23), l'étrier de frein (2) puisse continuer de pivoter au-delà de la barrette (23), qu'après ce pivotement, l'étrier de frein (2) peut être repoussé sur le boulon de guidage (3) et, en cas de recul, est appliqué contre l'autre côté de la deuxième butée (23).

15. Frein à disque à étrier flottant conforme à la revendication 14, caractérisé en ce qu'à au moins l'une des extrémités de la barrette (24) disposée sur l'étrier de frein (2) est prévu un ergot (25).

16. Frein à disque à étrier flottant conforme à la revendication 2 ou 9, caractérisé en ce que les butées (16, 21, 23) sont disposées de façon que les éléments qui y sont appliqués le sont avant que l'étrier de frein (2) ne soit amené sur son point mort.

17. Frein à disque à étrier flottant conforme à la revendication 4, caractérisé en ce que la bosse (13, 14, 20, 27) est une came (27) d'un ressort à came (28) disposé autour du bossage (5) de l'étrier de frein (2).

18. Frein à disque à étrier flottant conforme à la revendication 17, caractérisé en ce que la broche (26) est disposée dans le support de frein (1) de façon que l'étrier de frein (2) doive être amené sur son point mort pour que la broche (26) vienne au contact de la came (27) du ressort à came (28).

19. Frein à disque à étrier flottant conforme à la revendication 17, caractérisé en ce que le ressort à came (28) est un ressort à boudin.

20. Frein à disque à étrier flottant conforme à la revendication 17, caractérisé en ce que le ressort à came (28) est un ressort à lames.

21. Frein à disque à étrier flottant conforme à la revendication 1, caractérisé en ce que la première butée (13, 14, 20, 24, 27, 29, 37) est une came (29) qui est disposée sur le bossage (5) de l'étrier de frein (2) et qui vient au contact d'un élément élastique disposé sur le support de frein (1).

22. Frein à disque à étrier flottant conforme à la revendication 21, caractérisé en ce que l'élément élastique (30) est une broche (31) montée dans un support en caoutchouc dans le support de frein (1).

23. Frein à disque à étrier flottant conforme à la revendication 21, caractérisé en ce que l'élément élastique (30) est une broche (33) à élasticité propre montée dans le support de frein (1).

24. Frein à disque à étrier flottant conforme à la revendication 1, caractérisé en ce que la première butée (13, 14, 20, 24, 27, 29, 37) est une came qui est disposée à l'intérieur du bossage (5) de l'étrier de frein (2) sur la pièce fixe (34) du frein à disque et au contact de laquelle vient une broche (37) sollicitée élastiquement et guidée à travers un perçage (36) de l'étrier de frein (2).

25. Frein à disque à étrier flottant, en particulier pour des véhicules automobiles, comprenant un support de frein (51) monté fixe auquel un étrier de frein (52) est relié de manière axialement coulissante par l'intermédiaire d'au moins un boulon de guidage (53), le boulon de guidage (53) servant d'axe de pivotement pour l'étrier de frein (52) et l'étrier de frein (52) étant empêché de retomber accidentellement, caractérisé en ce que l'étrier de frein (52) comporte un palier supplémentaire à friction ou à cliquet dans la zone de l'axe de pivotement.

26. Frein à disque à étrier flottant conforme à la revendication 25, le boulon de guidage (53) servant d'axe de pivotement étant un manchon (62) dont l'une des extrémités est reliée au support de frein (51) et dont l'autre extrémité supporte une vis (63), caractérisé en ce que, dans un bossage (55) de l'étrier de frein (52) recevant le boulon de guidage (53), est pratiqué un perçage (60) dont le diamètre est supérieur à celui du perçage de guidage (61) de l'étrier de frein (52), en ce que, dans le perçage (60) est emmanchée une douille (64) dont le diamètre est supérieur à celui du perçage (60) et qui comporte des cannelures longitudinales (65), et en ce que, sur la vis (63), est fixé un capuchon élastique (66) comportant des bosses longitudinales (67) qui correspondent aux cannelures (65) de la douille (64) et s'engagent dans ces dernières.

27. Frein à disque à étrier flottant conforme à la revendication 26, caractérisé en ce que la douille (64) obture le bossage (55) de l'étrier de frein (52) et forme ainsi un capuchon de protection (68).

28. Frein à disque à étrier flottant conforme à la revendication 25, le boulon de guidage (53) servant d'axe de pivotement étant un manchon (62) dont l'une des extrémités est reliée au support de frein (51) et dont l'autre extrémité supporte une vis (63) à six pans extérieurs, caractérisé en ce que, dans un bossage (55) de l'étrier de frein (52) recevant le boulon de guidage (53), est pratiqué un perçage (60) dont le diamètre est supérieur à celui du perçage de guidage (61) de l'étrier de frein (52), en ce que, dans le perçage (60), est emmanchée une douille (69) à six pans intérieurs qui correspondent aux six pans extérieurs de la vis (63), de sorte que la vis (63) peut se déplacer librement dans le sens axial, et en ce que la douille (69) immobilisée par la vis (63) dans le sens de rotation de l'étrier de frein (52) produit un couple de friction lors de la rotation de l'étrier de frein (52).

29. Frein à disque à étrier flottant conforme à la revendication 28, caractérisé en ce que l'épaisseur de paroi de la douille (69) correspond sensiblement à l'évidement formant le perçage (60) dans le perçage de guidage (61) de l'étrier de frein (52), et en ce que la face avant (72) de la douille (69) est appliquée par un ressort (71) contre la paroi avant (73) du perçage (60) où elle produit une friction lors de la rotation de l'étrier de frein (52).

30. Frein à disque à étrier flottant conforme à la revendication 29, caractérisé en ce que le ressort est un ressort Belleville (71).

31. Frein à disque à étrier flottant conforme à la revendication 28, caractérisé en ce que la douille (69) est un manchon élastique (74, 75, 77, 82) dont le diamètre extérieur est supérieur au diamètre intérieur du perçage (60), et en ce que le manchon élastique (74, 75, 77, 82) est emmanché dans le perçage (60) avec une précontrainte.

32. Frein à disque à étrier flottant conforme à la revendication 31, caractérisé en ce que le manchon élastique (74) est un manchon fermé et fendu.

33. Frein à disque à étrier flottant conforme à la revendication 31, caractérisé en ce que le manchon élastique est une pièce en tôle (75) possédant un rebord (76) tourné vers l'intérieur, en ce que la pièce en tôle (75) comporte, sur l'extrémité libre du rebord (76), six pans intérieurs qui correspondent aux six pans extérieurs de la vis (63), et en ce que le rebord (76) s'étend sur toute la longueur de la tête de la vis, le long de cette dernière.

34. Frein à disque à étrier flottant conforme à la revendication 31, caractérisé en ce que le manchon élastique (77) est conçu de manière étagée, en ce que la portion (78) du manchon élastique (77) placée contre la paroi avant (73) du perçage (60) est appliquée contre la paroi intérieure (79) du perçage (60) avec une précontrainte, et en ce que cette première portion (78) de grand diamètre se prolonge, après un étage (80), par une deuxième portion (81), parallèle à la première portion (78), de plus petit diamètre à six pans intérieurs qui coopèrent avec les six pans extérieurs de la vis (63).

35. Frein à disque à étrier flottant conforme à la revendication 31, caractérisé en ce que le manchon élastique (82) est conçu de façon qu'une portion (83) du manchon élastique (82) comportant six pans intérieurs s'étende sur tout le trajet de déplacement de la vis (63) jusqu'à la paroi avant (73) du perçage (60), en ce que s'y rattache une portion verticale (84) se prolongeant per une troisième portion (85) parallèle à la première portion (83) et dont le diamètre extérieur est supérieur au diamètre intérieur du perçage (60).

Fig. 1

Fig. 2

Fig. 3

# Fig. 4

# Fig. 5

# Fig. 6

Fig. 7

Fig. 8

Fig. 9

Fig. 10

Fig. 11

5

2

3

4

29

30

Fig. 12

31

32   1

Fig. 13

33

1

1

Fig. 14

Fig. 15

Fig. 17

Fig. 16

Fig. 18

0 147 522

Fig. 19

Fig. 20

Fig. 21

Fig. 22

0 147 522

## Fig. 23

52

59

57    58    56

61  73  60  VII    69  55
74  63
74
87
63

51

62  52  53

VII

## Fig. 24

52    74
63

## Fig. 25

52

59

57    58    56

61  73  60  IX    55  75  87  52  75

51

62  52  53  75  60

## Fig. 26

52    75

39

### Fig. 27

### Fig. 28